# EUROPEAN PATENT SPECIFICATION

(11) **EP 2 354 826 B1**
(45) Date of publication and mention of the grant of the patent: **05.06.2013**
(21) Application number: 11000757.2
(22) Date of filing: 01.02.2011
(51) Int. Cl.: G02B 6/44, H05K 1/14, H05K 7/14, G02B 6/43

(54) **Communications equipment housings, assemblies, and related alignment features and methods**
Optische Schnittstellenkarten, Anordnungen und zugehörige Verfahren, geeignet zur Installation und Verwendung in Antennensystemausrüstungen
Cartes d'interfaces optiques, ensembles et procédés associés adaptés pour l'installation et l'utilisation dans un équipement de système d'antenne

(30) Priority: 04.02.2010 US 301495 P; 04.02.2010 US 301488 P; 23.03.2010 US 316584 P; 23.03.2010 US 316591 P; 31.03.2010 US 751895; 31.03.2010 US 751884
(43) Date of publication of application: 10.08.2011
(73) Proprietor: Corning Cable Systems LLC, Hickory NC 28602 (US)
(72) Inventor: Blackwell, Chois, A., Jr., North Richland Hills TX 76180 (US); Cox, Terry, D., Keller TX 76248 (US)
(74) Representative: Sturm, Christoph

(56) References cited:
- EP-A2- 1 968 362
- WO-A1-2008/130341
- CN-A- 101 801 162
- US-A- 5 813 867
- US-A1- 2003 092 396

## Description

### BACKGROUND

### Field of the Disclosure

The technology of the disclosure relates generally to enclosures for housing distributed antenna system equipment provided in a distributed antenna system. The distributed antenna system equipment can include optical fiber-based distributed antenna equipment for distributing radio frequency (RF) signals over optical fiber to remote antenna units.

### Technical Background

Wireless communication is rapidly growing, with ever-increasing demands for high-speed mobile data communication. As an example, so-called "wireless fidelity" or "WiFi" systems and wireless local area networks (WLANs) are being deployed in many different types of areas (e.g., coffee shops, airports, libraries, etc.). Wireless communication systems communicate with wireless devices called "clients," which must reside within the wireless range or "cell coverage area" in order to communicate with an access point device.

One approach to deploying a wireless communication system involves the use of "picocells." Picocells are radio frequency (RF) coverage areas. Picocells can have a radius in the range from a few meters up to twenty meters as an example. Combining a number of access point devices creates an array or picocells that cover an area called a "picocellular coverage area." Because the picocell covers a small area, there are typically only a few users (clients) per picocell. This allows for minimizing the amount of RF bandwidth shared among the wireless system users. In this regard, head-end communication equipment can be provided to receive incoming RF signals from a wired or wireless network. The head-end communication equipment distributes the RF signals on a communication downlink to remote antenna units distributed throughout a building or facility. Client devices within range of the picocells can receive the RF signals and can communicate RF signals back to an antenna in the remote antenna unit, which are communicated back on a communication uplink to the head-end communication equipment and onto the network. The head-end communication equipment may be configured to convert RF signals into optical fiber signals to be communicated over optical fiber to the remote antenna units.

It may be desirable to provide a housing or enclosure for communication equipment for a distributed antenna system that is easily assembled. Thus, the housing or enclosure can be easily assembled in the field. Further, it may further be desirable to provide communication equipment for a distributed antenna system that is compatible with expansion of picocells. Thus, it may be desirable to provide communication equipment for a distributed antenna system that can be easily upgraded or enhanced to support an increased number of remote antenna units, as an example. It may be further desired to allow technicians or other users to provide this increased support in the field, thus making it desirable to allow equipment changes and upgrades to easily be made in the communication equipment with ease and proper function.

US-A-5 813 867 discloses a radio-frequency connector assembly, comprising: an enclosure; a communications board having a first end and a second end opposite the first end, and further comprising at least one radio-frequency connector disposed of the communications board; an interface printed circuit board card having at least one complementary radio-frequency connector disposed on the interface printed circuit board card; wherein the radio-frequency connectors are designed to receive radio-frequency connections.

Other prior art is known from EP-A2-1 968 362.

### SUMMARY OF THE DETAILED DESCRIPTION

The invention provides a communications assembly as defined in claim 1.

Embodiments disclosed in the detailed description also include modular distributed antenna system equipment housings, assemblies, and related alignment features. In one embodiment, a modular distributed antenna system assembly is disclosed. The assembly includes at least one first plate including at least one first locating alignment slot. The assembly also includes at least one second plate including at least one locating tab. The at least one locating tab engages with the at least one first locating alignment slot to align the at least one first plate in at least two dimensions to the at least one second plate to form an enclosure configured to support at least one distributed antenna system component.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE FIGURES

**FIG. 1** is a partially schematic cut-away diagram of an exemplary building and building infrastructure in which a distributed antenna system is employed;

**FIG. 2** is an exemplary schematic diagram of an exemplary head-end communications unit ("HEU") deployed in the distributed antenna system in **FIG. 1****;**

**FIG. 3** is an exemplary distributed antenna system equipment housing assembly ("assembly") and enclosure configured to support the HEU of **FIG. 2****;**

**FIG. 4** is an exemplary optical interface module (OIM) comprised of a pair of optical interface cards (OIC) configured to be installed in the distributed antenna system equipment housing assembly of **FIG. 3** as part of the HEU;

**FIG. 5** is a front view of the enclosure of **FIG. 3** with a midplane interface card of the HEU of **FIG. 2** installed therein;

**FIG. 6** is a rear side perspective view of the enclosure of **FIG. 3** with the midplane interface card of **FIG. 5** installed on a midplane support installed therein;

**FIG. 7** is a close-up front, right side perspective view of the midplane interface card of **FIG. 5** installed on a midplane support installed in the enclosure of **FIG. 3****;**

**FIG. 8** illustrates a front side of the midplane interface card of **FIG. 5** without connectors attached to the midplane interface card;

**FIG. 9** illustrates a rear view of the enclosure of **FIG. 3** with a downlink base transceiver interface (BTS) card (BIC) being inserted into the enclosure and an uplink BIC fully inserted into the enclosure and connected to the midplane interface card disposed in the enclosure;

**FIGS. 10A** and **10B** illustrate front and rear perspective views, respectively, of BIC assemblies that can be inserted in the enclosure of **FIG. 3** with the **BIC** disposed in the assemblies connected to the midplane interface card disposed in the enclosure of **FIG. 3****;**

**FIG. 11** illustrates a bottom view of the BIC assembly of **FIGS. 10A** and 10B;

**FIG. 12** illustrates a top view of the BIC assembly of **FIGS. 10** and **10B** installed in the enclosure of **FIG. 3****;**

**FIG. 13** is a side perspective view of the assembly of **FIG. 3** with downlink BIC connectors for the downlink BIC and uplink BIC connectors for the uplink BIC disposed in downlink and uplink BIC connector plates, respectively, which are attached to the front of the enclosure;

**FIG. 14** is a front perspective view of the BIC connector plate illustrated in **FIG. 13** with BIC connectors disposed therethrough;

**FIG. 15** is a rear perspective view of the BIC connector plate with BIC connectors disposed therethrough illustrated in **FIG. 14****;**

**FIG. 16** is a rear side perspective view of the enclosure of **FIG. 13** illustrating cables connected to the BIC connectors disposed through the BIC connector plates routed through openings in the midplane support to the downlink BIC and uplink BIC disposed in the enclosure;

**FIG. 17** is a top view of the enclosure of **FIG. 13** illustrating cables connected to the BIC connectors disposed through the BIC connector plates routed through openings in the midplane support to the downlink BIC and uplink BIC disposed in the enclosure;

**FIG. 18** is a front exploded perspective view of plates of the enclosure of FIG. 3 that are assembled together in a modular fashion to form the enclosure;

**FIGS. 19A** and **19B** illustrate top and bottom perspective views of the enclosure of **FIG. 3****;**

**FIG. 20** illustrates a close-up view of the engagement of the top plate of the enclosure in **FIG. 3** with a side plate and midplane support of the enclosure of **FIG. 3****;**

**FIG. 21** illustrates a close-up view of locating tabs disposed in the top plate of the enclosure of **FIG. 3** engaged with alignment slots disposed in the side plate of the enclosure of **FIG. 3****;**

**FIG. 22** is a side view of the OIM that can be disposed in the enclosure of FIG. 3;

**FIG. 23** is another perspective side view of the OIM that can be disposed in the enclosure of **FIG. 3****;**

**FIG. 24** is a rear perspective view of the OIM that can be disposed in the enclosure of **FIG. 3****;****FIG. 25** is a perspective view of an alignment block that secures the OIC to an OIM plate of the OIM of **FIGS. 23** and **24****;**

**FIG. 26A** is a rear perspective view the OIM of **FIGS. 23** and **24** without shields installed;

**FIG. 26B** is a rear perspective view the OIM of **FIGS. 23** and **24** with shield plates installed;

**FIG. 27** is a close-up rear view of the OIM of **FIGS. 23** and **24** showing standoffs disposed between two printed circuit boards (PCBs) of the OICs, wherein one of the PCBs is a floating PCB;

**FIG. 28** is a cross-sectional side view of the PCBs of the OICs secured to each other via the standoffs of **FIG. 27** to provide one of the OIC PCBs as a floating PCB and the other of the OIC PCBs as a fixed PCB;

**FIGS. 29A** and **29B** are perspective views of the floating standoffs in FIG. 27;

**FIGS 29C** and **29D** are side and top views, respectively, of the standoffs of **FIG. 31****;**

**FIG. 30** is a side cross-sectional view of the standoff of **FIG. 27****;**

**FIG. 31** is a side cross-sectional view of an alternative standoff that can be employed to secure the OIC PCBs and provide one of the OIC PCBs as a floating PCB;

**FIGS. 32A** and **32B** are side cross-sectional views of an alternative standoff that can be employed to secure the OIC PCBs and shield plates and provide one of the OIC PCBs as a floating PCB;

**FIG. 33** is a side view of the assembly of **FIG. 3** showing an OIC digital connector being connected to a complementary connector disposed in the midplane interface card to align the OIC RF connector to be connected to the complementary RF connector disposed in the midplane interface card;

**FIG. 34** is a top perspective view of an OIC disposed in the OIM of **FIGS. 26A** and **26B** illustrating the extension of the OIC PCB of beyond transmitter optical sub-assemblies (TOSAs) and receiver optical sub-assemblies (ROSAs) disposed in the OIC PCB;

**FIG.** 35 is a front perspective view of the assembly and enclosure of **FIG. 3** with a cooling fan protector plate installed to protect a cooling fan installed in the enclosure;

**FIG. 36** is a side cross-sectional view of the enclosure of **FIG. 35** illustrating a cooling fan duct disposed behind the cooling fan in the enclosure to direct air drawn into the enclosure by the cooling fan into a lower plenum of the enclosure;

**FIG. 37** is an exemplary schematic diagram of air flow drawn into the enclosure by the cooling fan through the enclosure of **FIG. 35****;**

**FIG. 38** is another side cross-sectional view of the enclosure of **FIG. 35** illustrating the directing of air through openings in a lower plenum plate through OICs installed in the enclosure and through openings disposed in an upper plenum plate in the enclosure;

**FIG. 39** is a rear perspective view of the enclosure of **FIG. 35** illustrating an air outlet from the upper plenum of the enclosure;

**FIG. 40** is a rear perspective view of the enclosure of **FIG. 35** illustrating the air outlet from the upper plenum of the enclosure with the top plate of the enclosure removed and illustrating openings in the upper plenum plate into the uplink BIC compartment of the enclosure; and

**FIG. 41** is a top view of the uplink BIC with openings disposed therein to allow air to flow from the downlink BIC to the uplink BIC disposed above the downlink BIC in the enclosure of **FIG. 35****.**

### DETAILED DESCRIPTION

Reference will now be made in detail to the embodiments, examples of which are illustrated in the accompanying drawings, in which some, but not all embodiments are shown. Indeed, the concepts may be embodied in many different forms and should not be construed as limiting herein; rather, these embodiments are provided so that this disclosure will satisfy applicable legal requirements. Whenever possible, like reference numbers will be used to refer to like components or parts.

Embodiments disclosed in the detailed description include equipment housings, assemblies, and related alignment features and methods. The equipment may be distributed antenna equipment.

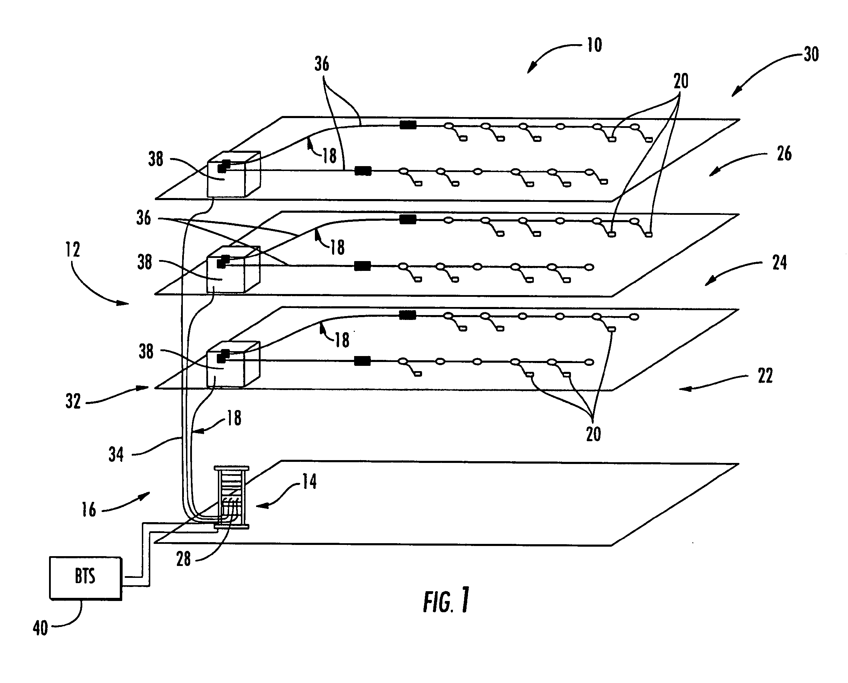

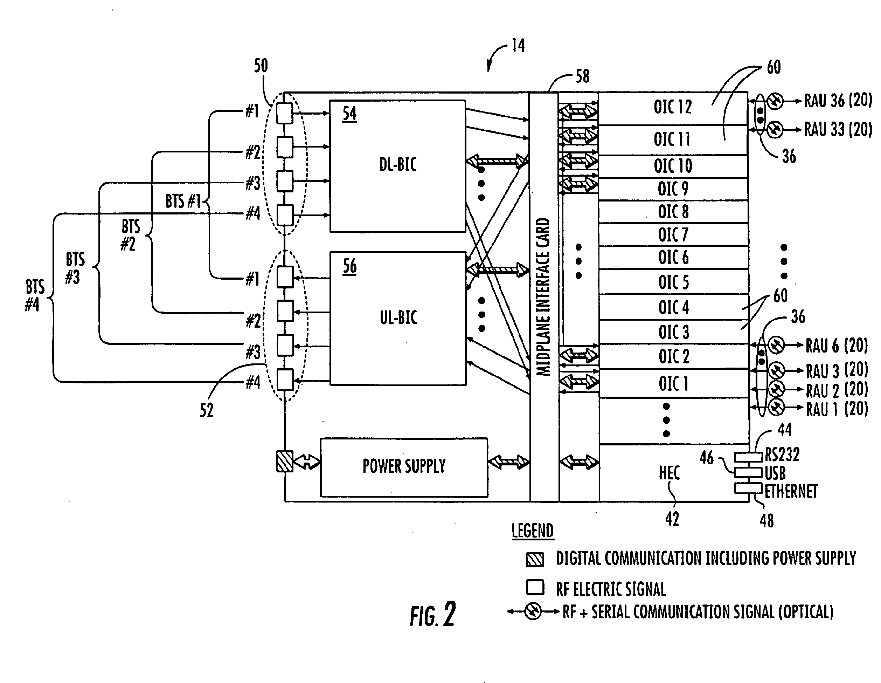

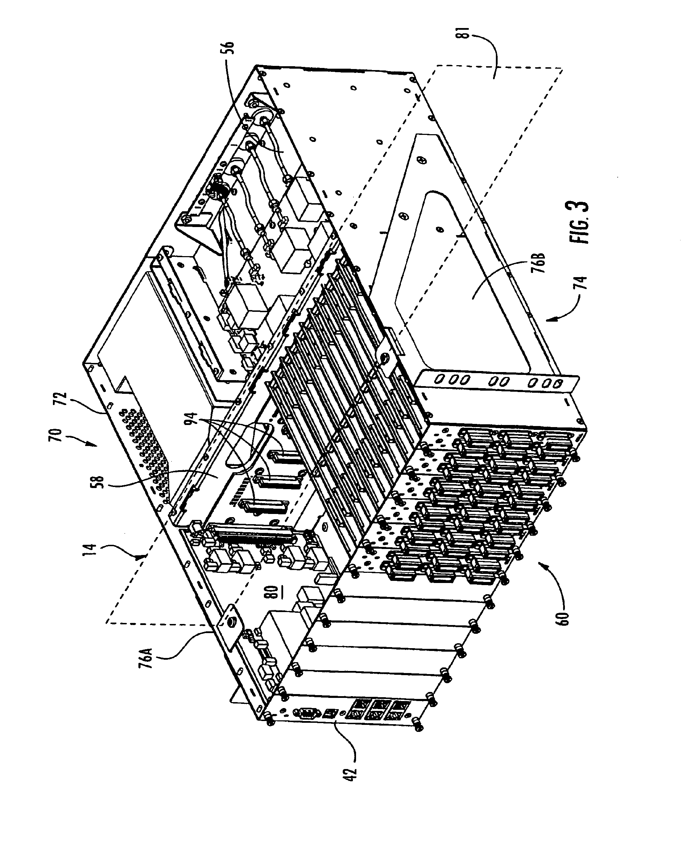

Before discussing the exemplary distributed antenna system equipment, assemblies and enclosures and their alignment features, which start at **FIG. 3****,** an exemplary distributed antenna system is first described with regard to **FIGS. 1** and **2**. In this regard, **FIG. 1** is a schematic diagram of a partially schematic cut-away diagram of a building **10** that generally represents any type of building in which a distributed antenna system **12** might be deployed. The distributed antenna system **12** incorporates a head-end communications unit or head-end unit (HEU) **14** to provide various types of communication services to coverage areas within an infrastructure **16** of the building **10.** The HEU **14** is simply an enclosure that includes at least one communication component for the distributed antenna system **12.** For example, as discussed in more detail below, the distributed antenna system **12** in this embodiment is an optical fiber-based wireless communication system that is configured to receive wireless radio frequency (RF) signals and provide the RF signals as Radio-over-Fiber (RoF) signals to be communicated over optical fiber **18** to remote antenna units (RAUs) **20** distributed throughout the building **10.** The distributed antenna system **12** in this embodiment can be, for example, an indoor distributed antenna system (IDAS) to provide wireless service inside the building infrastructure **10.** These wireless services can include cellular service, wireless services such as radio frequency identification (RFID) tracking, wireless fidelity (WiFi), local area network (LAN), and combinations thereof, as examples.

The terms "fiber optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Coming Incorporated.

With continuing reference to **FIG. 1****,** the infrastructure **16** includes a first (ground) floor **22,** a second floor **24,** and a third floor **26.** The floors **22, 24, 26** are serviced by the HEU **14** through a main distribution frame **28** to provide a coverage area **30** in the infrastructure **16.** Only the ceilings of the floors **22, 24, 26** are shown in **FIG. 1** for simplicity of illustration. In this example embodiment, a main cable 32 has a number of different sections that facilitate the placement of a large number of RAUs 20 in the infrastructure **16.** Each RAU **20** in turn services its own coverage area in the coverage area **30.** The main cable **32** can include, for example, a riser section **34** that carries all of the uplink and downlink optical fiber cables to and from the HEU **14.** The main cable **32** can include one or more multi-cable (MC) connectors adapted to connect select downlink and uplink optical fiber cables, along with an electrical power line, to a number of optical fiber cables **36.**

In this example embodiment, an interconnect unit **38** is provided for each floor **22, 24,** and **26.** The interconnect units **38** include an individual passive fiber interconnection of optical fiber cable ports. The optical fiber cables **36** include matching connectors. In this example embodiment, the riser section **34** includes a total of thirty-six (36) downlink and thirty-six (36) uplink optical fibers, while each of the six (6) optical fiber cables **36** carries six (6) downlink and six (6) uplink optical fibers to service six (6) R.AUs **20.** The number of optical fiber cables **36** can be varied to accommodate different applications, including the addition of second, third, etc. HEUs **14**.

According to one aspect, each interconnect unit **38** can provide a low voltage DC current to the electrical conductors in the optical fiber cables 36 for powering the RAUs **20.** For example, the interconnect units **38** can include an AC/DC transformer to transform 110V AC power that is readily available in the infrastructure **16.** In one embodiment, the transformers supply a relatively low voltage DC current of 48V or less to the optical fiber cables **36.** An uninterrupted power supply could be located at the interconnect units **38** and at the HEU **14** to provide operational durability to the distributed antenna system **12.** The optical fibers utilized in the optical fiber cables **36** can be selected based upon the type of service required for the system, and single mode and/or multi-mode fibers may be used.

The main cable **32** enables multiple optical fiber cables 36 to be distributed throughout the infrastructure **16** (e.g., fixed to the ceilings or other support surfaces of each floor **22, 24** and **26**) to provide the coverage area **30** for the first, second and third floors **22, 24** and **26.** In this example embodiment, the HEU **14** is located within the infrastructure **16** (e.g., in a closet or control room), while in another example embodiment, the HEU **14** may be located outside of the building at a remote location. A base transceiver station (BTS) **40,** which may be provided by a second party such as cellular service provider, is connected to the HEU **14,** and can be co-located or located remotely from the HEU **14.** A BTS is any station or source that provides an input signal to the HEU **14** and can receive a return signal from the HEU **14.** In a typical cellular system, for example, a plurality of BTSs are deployed at a plurality of remote locations to provide wireless telephone coverage. Each BTS serves a corresponding cell and when a mobile station enters the cell, the BTS communicates with the mobile station. Each BTS can include at least one radio transceiver for enabling communication with one or more subscriber units operating within the associated cell.

The HEUs **14** are host neutral systems in this embodiment which can provide services for one or more BTSs **40** with the same infrastructure that is not tied to any particular service provider. The HEU **14** is connected to six (6) optical fiber cables **36** in this embodiment.

**FIG. 2** is a schematic diagram of the exemplary HEU **14** provided in the distributed antenna system **12** of **FIG. 1** to provide further detail. As illustrated therein, the HEU **14** includes a number of exemplary distributed antenna system components. A distributed antenna system component can be any component that supports communication for the distributed antenna system, such as the distributed antenna system **12** of **FIG. 1****.** For example, a head-end controller (HEC) **42** is included that manages the functions of the HEU **14** components and communicates with external devices via interfaces, such as a RS-232 port **44,** a Universal Serial Bus (USB) port **46,** and an Ethernet port **48,** as examples. The HEU **14** can be connected to a plurality of BTSs, transceivers, etc. at BIC connectors **50, 52.** BIC connectors **50** are downlink connectors and BIC connectors 52 are uplink connectors. Each downlink BIC connector **50** is connected to a downlink BTS interface card (BIC) **54** located in the HEU **14,** and each uplink BIC connector **52** is connected to an uplink BIC 56 also located in the HEU **14.** The downlink BIC **54** is configured to receive incoming or downlink RF signals from the BTS inputs, as illustrated in **FIG. 2****,** to be communicated to the RAUs **20.** The uplink BIC **56** is configured to provide outgoing or uplink RF signals from the RAUs **20** to the BTSs as a return communication path.

The downlink BIC **54** is connected to a midplane interface card **58.** The uplink BIC **56** is also connected to the midplane interface card **58.** The downlink BIC **54** and uplink BIC **56** can be provided in printed circuit boards (PCBs) that include connectors that can plug directly into the midplane interface card **58.** The midplane interface card **58** is also in direct electrical communication with a plurality of optical interface cards (OICs) **60,** which are in optical and electrical communication with the RAUs **20** via the optical fiber cables **36.** The OICs **60** convert electrical RF signals from the downlink BIC **54** to optical signals, which are then communicated over the optical fiber cable **36** to the RAUs **20.** The OICs **60** in this embodiment support up to three (3) RAUs **20** each.

The OICs **60** can also be provided in a PCB that includes a connector that can plug directly into the midplane interface card **58** to couple the links in the OICs **60** to the midplane interface card **58.** In this manner, the exemplary embodiment of the HEU **14** is scalable to support up to thirty-six (36) RAUs **20** since the HEU **14** can support up to twelve (12) OICs **60.** If less than thirty-four (34) RAUs **20** are to be supported by the HEU **14,** less than twelve OICs **60** can be included in the HEU **14** and connected into the midplane interface card **58.** An OIC **60** is needed for every three (3) RAUs **20** supported by the HEU **14** in this embodiment. OICs **60** can also be added to the HEU **14** and connected to the midplane interface card **58** if additional RAUs **20** are desired to be supported beyond an initial configuration. In this manner, the number of supported RAUs **20** by the HEU **14** is scalable and can be increased or decreased, as needed and in the field, by simply connecting more or less OICs **60** to the midplane interface card **58.**

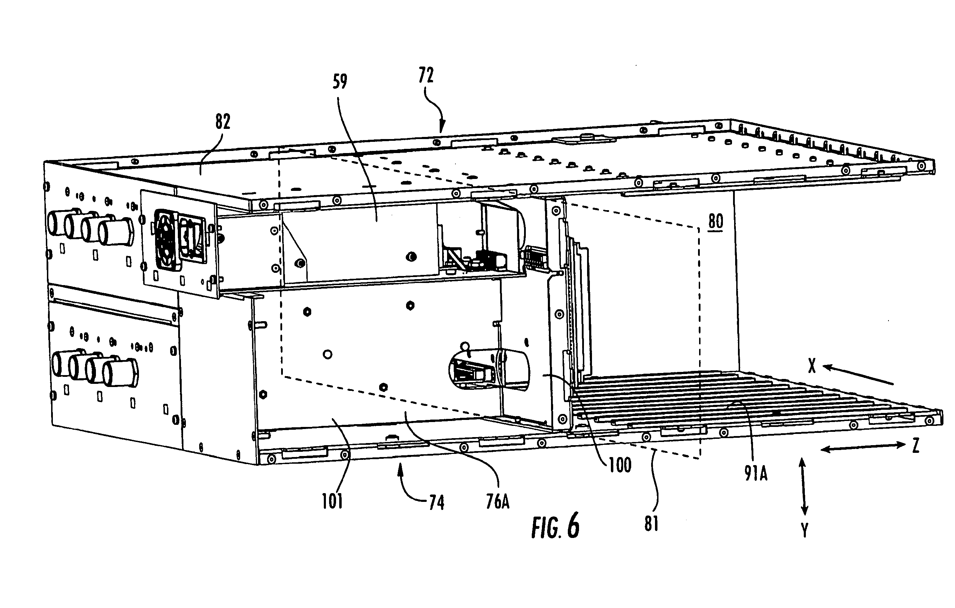

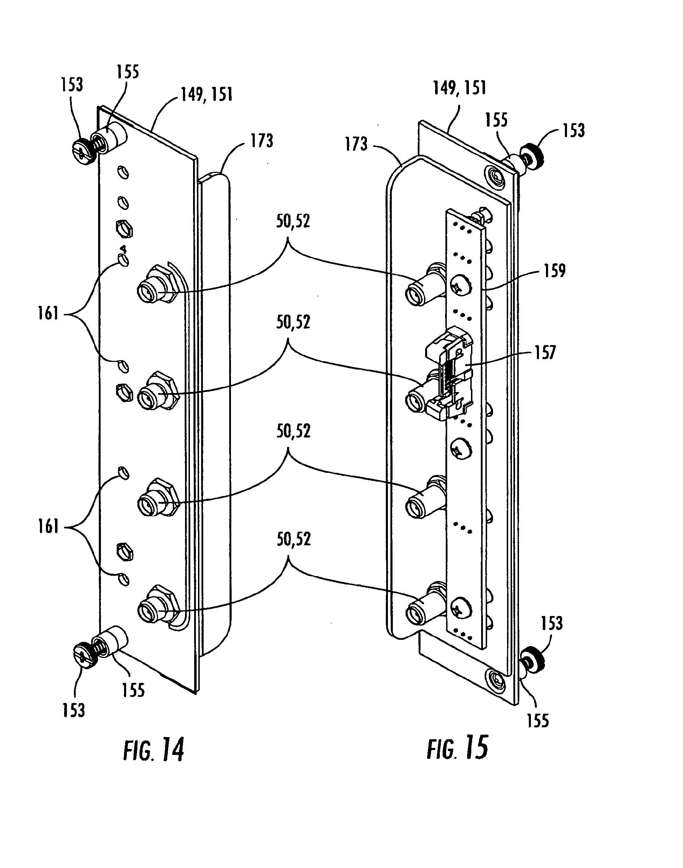

**FIG. 3** illustrates an exemplary distributed antenna system housing assembly **70** (referred to as "assembly **70**") that may be employed to provide an HEU, such as the HEU **14** in **FIG. 2****.** An HEU is simply at least one communications component provided in an enclosure or housing. As will be described in more detail below, the assembly **70** is modular. The assembly **70** is configured to be easily assembled in a factory or in the field by a technician. Further, the assembly **70** supports a number of features that allow interface cards to be easily inserted and aligned with respect to the midplane interface card **58** to ensure that proper connections are made with other components of the HEU **14** that form part of the distributed antenna system, such as the distributed antenna system **12** in **FIG. 1****,** for example. As illustrated in **FIG. 3****,** the assembly **70** includes an enclosure **72.** The enclosure **72** is comprised of a bottom plate **74** (see also, **FIG. 14B**) and side plates **76A, 76B.** An internal cavity **80** is formed in the space formed inside the bottom plate **74** and the side plates **76A, 76B** when assembled together for locating components of the HEU **14,** such as the components illustrated in **FIG. 2****,** for example. A top plate **82** can also be provided and secured to the side plates **76A, 76B,** as illustrated in **FIG. 6****,** to protect the internal cavity **80** and protect components of the HEU **14** disposed therein. Note that only two plates can be provided for the enclosure **72,** if desired. For example, one plate could be a first plate wherein a second plate is attached to the first plate. The first plate could be any of the bottom plate **74,** the side plates **76A, 76B,** and top plate **82.** Also, the second plate could be any of the bottom plate 74, the side plates **76A, 76B,** and top plate **82.**

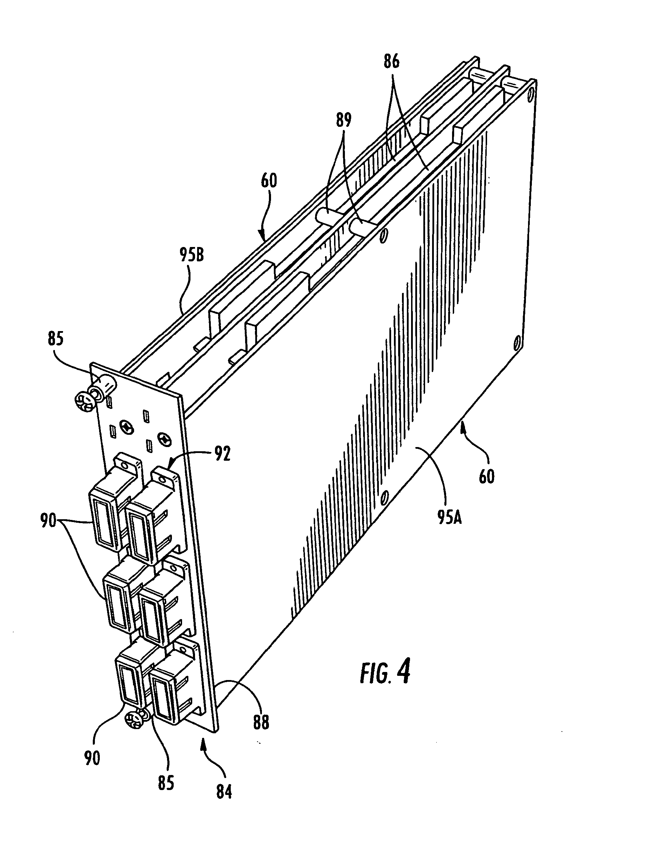

With continuing reference to **FIG. 3****,** the enclosure **72** is configured to support the OICs **60** illustrated in **FIG. 2****.** In this embodiment as illustrated **FIG. 4****,** the OICs **60** are grouped together in pairs to form an optical interface module (OIM) **84.** Thus, an OIM **84** is comprised of two (2) OICs **60** that each support up to three (3) RAUs **20** and thus the OIM **84** supports up to six (6) RAUs **20** in this embodiment. As illustrated in **FIG. 4****,** each OIC **60** is provided as a PCB **86** with integrated circuits provided therein to provide electrical signal to optical signal conversions for communication downlinks and vice versa for communication uplinks. An OIM plate **88** is provided to assist in coupling a pair of OICs **60** together to form the OIM **84.** As will be discussed in more detail below in this disclosure, the pair of OICs **60** are secured to the OIM plate **88** to form the OIM **84.** The OIM plate **88** serves to support the OIC **60** and contribute to the alignment the OICs 60 for proper insertion into and attachment to the enclosure **72,** which in turn assists in providing for a proper and aligned connection of the OICs **60** to the midplane interface card **58,** as shown in **FIG. 3****.** In this embodiment, the PCBs **86** are attached to shield plates **95A, 95B** that are attached to the OIM plate **88** to provide mechanical, RF, and other electromagnetic interference shielding.

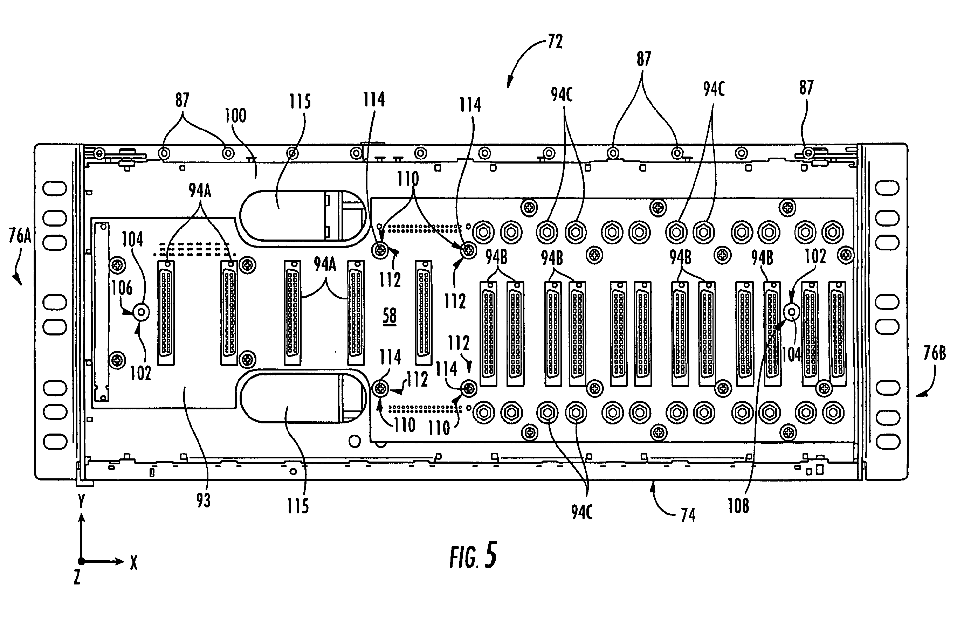

The OICs **60** are also secured together via standoff connectors **89** that contain alignment features to allow self-alignment between the OICs **60** when connected to the midplane interface card **58,** as illustrated in **FIG. 4** and as will be described in more detail in this disclosure. Connector adapters **90** are disposed in the OIM plate **88** and provide for optical connections of OIC PCBs **86** of the OICs **60.** The connector adapters **90** are disposed through openings **92** in the OIM plate **88** to provide external access when the OIM **84** is installed in the enclosure **72.** RAUs **20** can be connected to the connector adapters **90** to establish connections to the OICs **60** of the HEU **14,** and thus provided as part of the distributed antenna system **12,** via the optical fiber cables **36** in **FIG. 1** being connected to the connector adapters **90.** These connector adapters **90** may receive any type of fiber optic connector, including but not limited to FC, LC, SC, ST, MTP, and MPO. The OIM **84** is secured to the enclosure **72** via spring-loaded connector screws **85** disposed in the OIM plate **88** that are configured to be inserted into apertures **87** (see **FIG. 5**) to secure the OIM plate **88** to the enclosure **72,** as illustrated in **FIG. 3****.**

To provide flexibility in providing OIMs **84,** the HEC **42,** and the downlink BIC **54** and uplink BIC **56** in the HEU **14,** the enclosure **72** provides for the midplane interface card **58** to be disposed inside the internal cavity 80 extending between the side plates **76A, 76B** in a datum plane **81,** as illustrated in **FIG. 3****.** As will be discussed in more detail below, alignment features are provided in the midplane interface card **58** and the enclosure **72** such that proper alignment of the midplane interface card **58** with the enclosure **72** is effected when the midplane interface card **58** is inserted in the enclosure **72.** Thus, when the OIMs **84,** the HEC **42,** and the downlink BIC **54** and uplink BIC **56** are properly and fully inserted into the enclosure **72,** the alignment between these components and the enclosure **72** effect proper aligned connections between connectors on these components (e.g., connectors **94**) and the midplane interface card **58.** Proper connection to the midplane interface card **58** is essential to ensure proper connection to the proper components in the HEU **14** to support communications as part of a distributed antenna system supported by the HEU **14.** Aligning these connections is important for proper connection, especially given that the enclosure **72** is modular and tolerances of the enclosure components in the enclosure **72** can vary.

To illustrate the alignment features to properly align the midplane interface card 58 with the enclosure **72,** **FIG. 5** is provided to illustrate a front view of the enclosure **72** with the midplane interface card **58** installed therein. **FIG. 5** illustrates a front side **93** of the midplane interface card **58.** **FIG. 6** illustrates a rear perspective view of the enclosure **72** with the midplane interface card **58** installed. No HEU **14** components are yet installed in the enclosure **72** in **FIG. 5****.** **FIG. 6** illustrates channels 91A that are disposed in the bottom plate **74** of the enclosure **72** to receive bottom portions of the HEC **42** and OIMs **84** to align these components in the **X** and **Y** directions of the enclosure **72.** Channels **91B** (**FIG. 14B**) are also disposed on the top plate **82** and are aligned with the channels **91A** disposed in the bottom plate **74** to receive top portions of the HEC **42** and OIMs **84** to align these components in the **X** and **Y** directions. It is important that the midplane interface card **58** be properly aligned with regard to the enclosure **72** in each of the **X, Y,** and **Z** directions, as illustrated in **FIG. 5****,** because the midplane interface card **58** includes connectors **94A, 94B, 94C** that receive complementary connectors (described in more detail below) from components of the HEU **14** installed in the enclosure **72.**

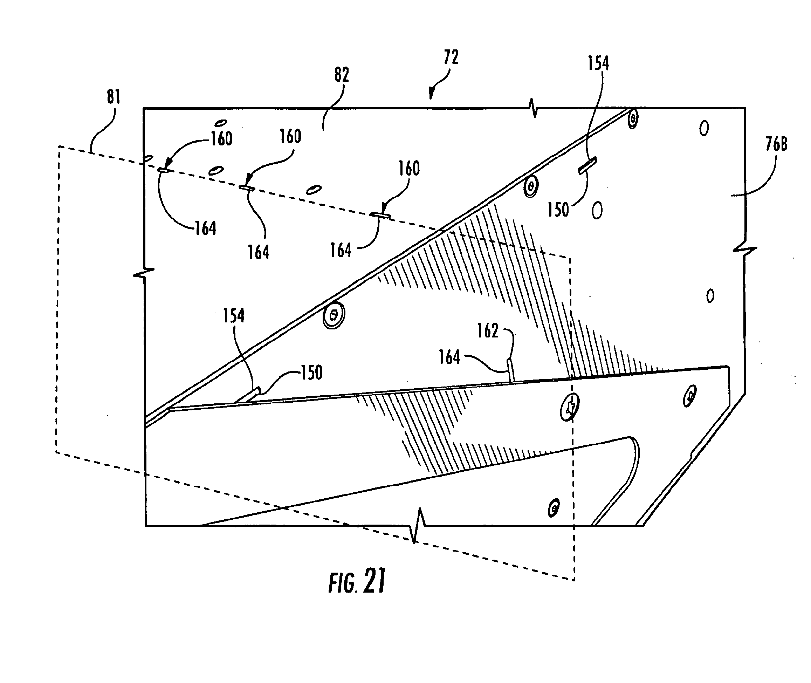

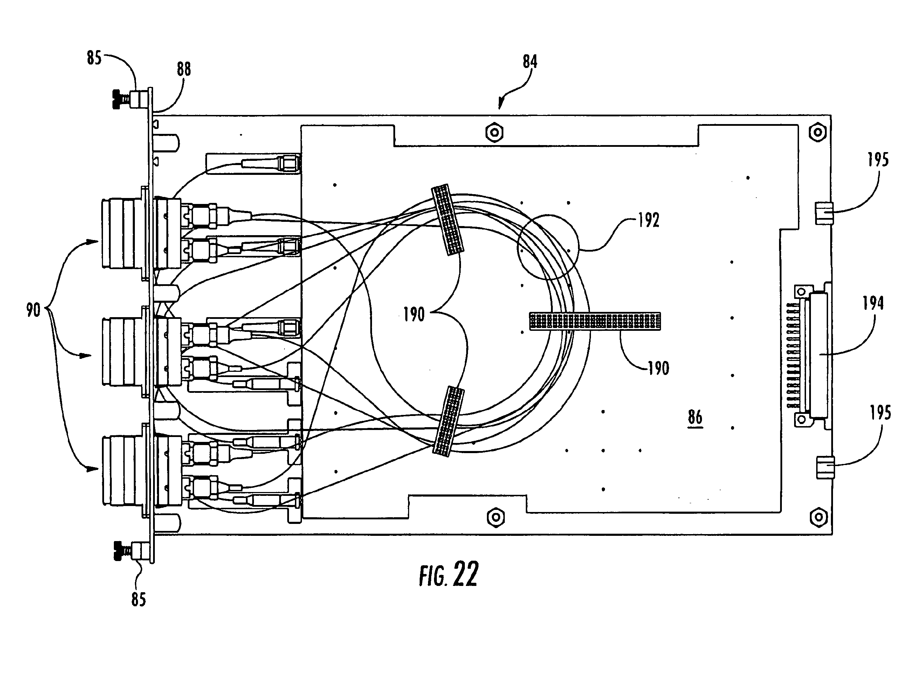

The connectors **94A** are disposed in the midplane interface card **58** and designed to accept connections from the HEC **42** and other like cards with a compatible complementary connector, as illustrated in **FIG. 3****.** The connectors **94B** are disposed in the midplane interface card **58** and designed accept digital connections from the OICs **60.** The RF connectors **94C** are disposed in the midplane interface card 58 and designed to accept RF connections from the OIC **60** (see element **195,** **FIGS. 21** **and** **22**). The enclosure **72** is designed such that alignment of the HEU **14** components is effected with respect to the enclosure **72** when installed in the enclosure **72.** Thus, if the connectors **94A, 94B, 94C** are not properly aligned with respect to the enclosure **72,** components of the HEU **14,** by their alignment with the enclosure **72,** may not be able to establish proper connections with the midplane interface card **58** and thus will not be connected to the distributed antenna system provided by the HEU **14.**

In this regard, as illustrated in **FIGS. 5** and **6****,** a midplane support **100** is installed in the datum plane **81** of the enclosure **72** to align the midplane interface card **58** in the **X, Y,** and **Z** directions with regard to the enclosure **72.** The midplane support **100** may be a plate formed from the same material as the bottom plate **74,** the side plates **76A, 76B,** and/or the top plate **82.** The midplane support **100** provides a surface to mount the midplane interface card **58** in the enclosure **72.** A divider plate **101** is also provided and attached to the midplane support **100,** as illustrated in **FIG. 6****,** to separate compartments for the downlink and uplink BICs **54, 56** and a power supply **59** (**FIG. 6**) to provide power for the HEC **42** and other components of the HEU **14.** As will also be described in more detail below, the modular design of the enclosure **72** is provided such that the midplane support **100** is properly aligned in the datum plane **81** in the **X, Y,** and **Z** directions when installed in the enclosure **72.** Thus, if alignment features are disposed in the midplane support **100** to allow the midplane interface card **58** to be properly aligned with the midplane support **100,** the midplane interface card **58** can be properly aligned with the enclosure **72,** and as a result, the connectors of the components of the HEU **14** installed in the enclosure **72** will be properly aligned to the connectors **94A, 94B, 94C** disposed in the midplane interface card **58.**

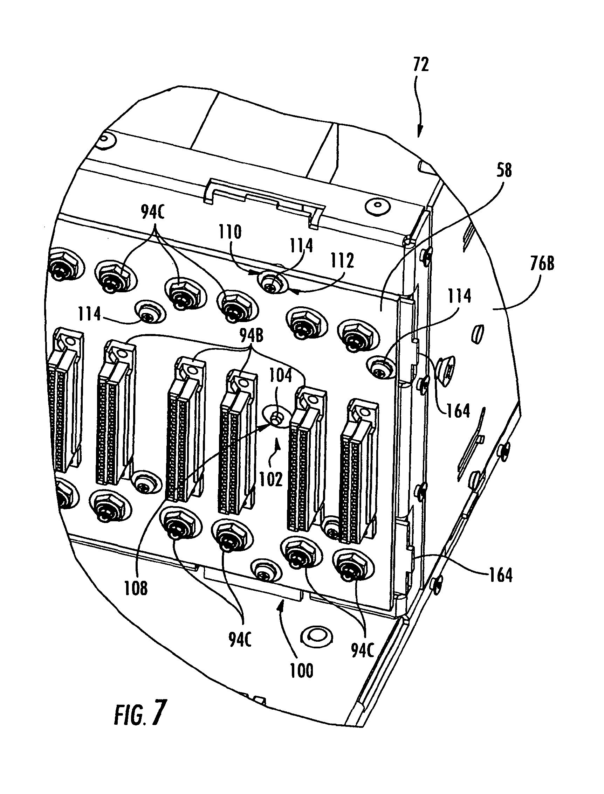

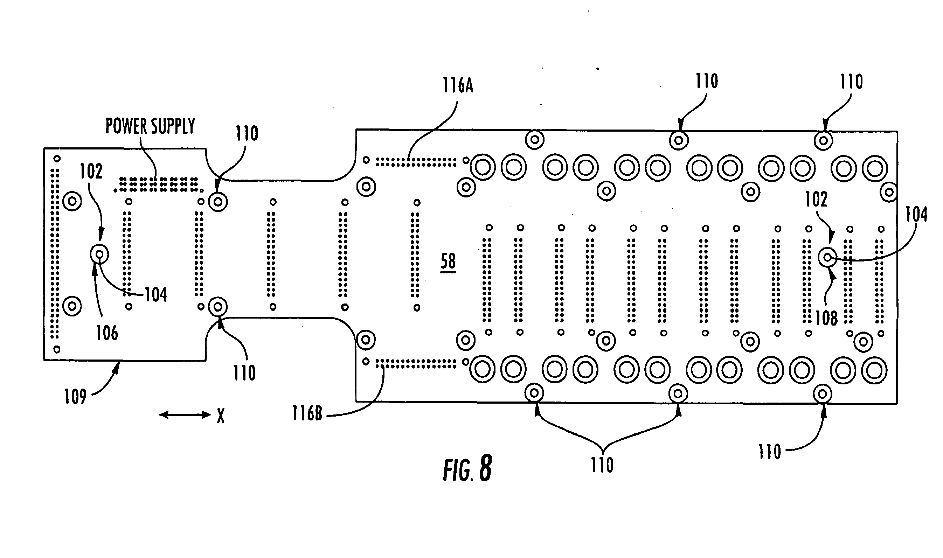

As illustrated in **FIG. 5****,** two alignment features **102** are disposed in the midplane support **100** and the midplane interface card **58** to align the midplane interface card **58** in the **X, Y,** and **Z** directions with respect to the midplane support **100,** and thus the enclosure **72.** **FIG. 7** illustrates a close-up view of the right-hand side of the midplane interface card **58** installed on the midplane support **100** that also shows one of the alignment features **102.** The alignment features **102** in this embodiment are comprised of PCB support guide pins **104** that are configured to be disposed in alignment openings **106, 108** disposed in the midplane interface card **58** and midplane support **100,** respectively. **FIG. 8** illustrates a front side **109** of the midplane interface card **58** without connectors. The PCB support guide pins **104** are installed and configured to be disposed through the alignment openings **106, 108.** Before the PCB support guide pins **104** can be inserted through both alignment openings **106, 108** disposed in the midplane interface card **58** and midplane support **100,** the alignment openings **106, 108** are aligned with the PCB support guide pins **104.** Thus, by this alignment, the midplane interface card **58** is aligned in the **X** and **Y** directions with the midplate support **100.** For example, the inner diameter of the openings **106, 108** may be .003 inches or less larger that the outer diameter of the PCB support guide pin **104.** Also, the tolerances between the center lines in the X direction of the alignment openings **106, 108** may be less than .01 inches or .005 inches, as examples, to provide an alignment between the alignment openings **106, 108** before the PCB support guide pins **104** can be disposed through both alignment openings **106, 108.** Any other tolerances desired can be provided.

Once the PCB support guide pins **104** are inserted into the openings **106, 108,** the midplane interface card **58** can be screwed in place to the midplane support **100.** In this regard, additional openings **110** are disposed in the midplane interface card **58,** as illustrated in **FIG. 5****.** These openings **110** are configured to align with openings **112** disposed in the midplane support **100** when the alignment openings **106, 108** are aligned or substantially aligned. A total of twenty (**20**) or other number of openings **110, 112** are disposed in the midplane interface card **58** and midplane support **100,** as illustrated in **FIG. 5****.** Fasteners **114,** such as screws for example, can be disposed through the openings **110, 112** to secure the midplane interface card **58** to the midplane support **100** and to, in turn, align the midplane interface card **58** to the midplane support **100** in the **Z** direction.

**FIG. 8** illustrates the midplane interface card **58** without the fasteners **114** disposed in the openings **110** to further illustrate the openings **110.** The fasteners **114** are screwed into self clinching standoff. For example, the self clinching standoff may be disposed in the midplane support **100.** The height tolerances of the self clinching standoffs may be between +.002 and -.005 inches, as an example. The inner diameter of the openings **110** may be .030 inches greater than the outer diameter of the fasteners **114,** for example, since openings **110** are not used to provide the alignment provided by PCB support guide pins **104** and openings **106, 108.** Further, as illustrated in **FIG. 5****,** openings **115** are disposed in the midplane support **100** to allow cabling to be extended on each side of the midplane interface card **58.** The nominal distance in one embodiment between the midplane support **100** and the midplane interface card **58** when installed is 0.121 inches, although any other distances could be provided.

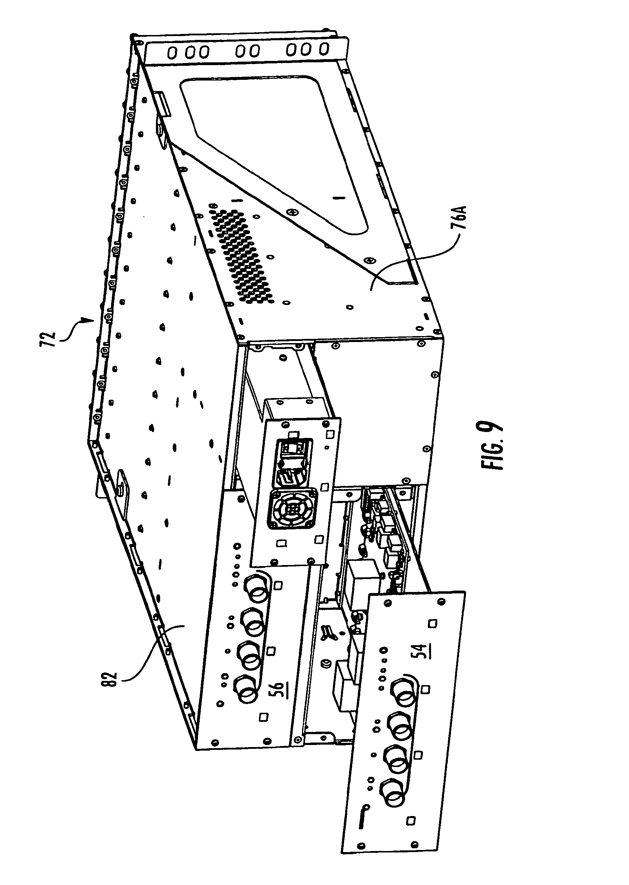

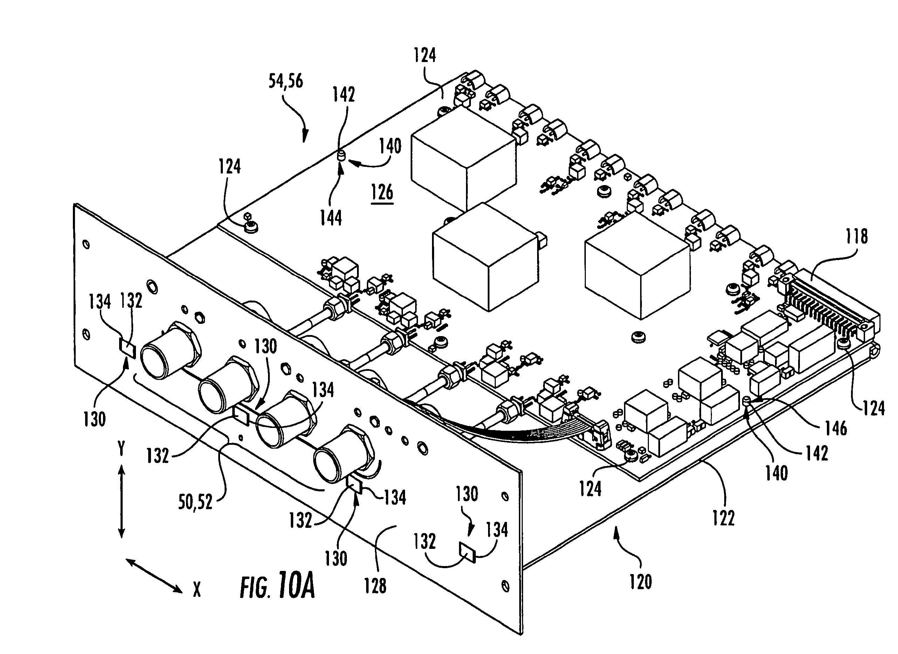

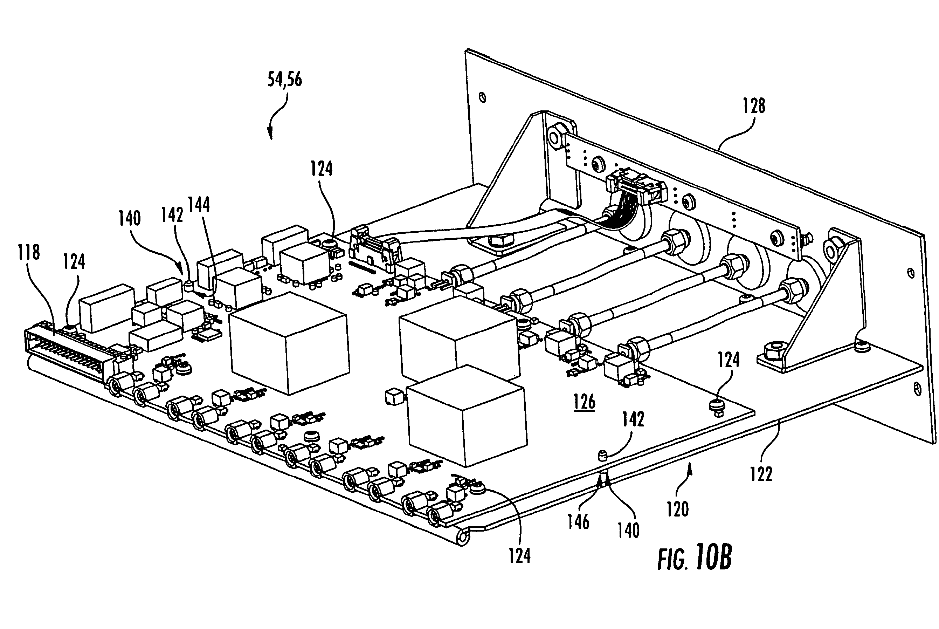

The midplane interface card **58** is also configured to receive direct connections from the downlink BIC **54** and the uplink BIC **56** when installed in the enclosure **72.** As illustrated in the rear view of the enclosure **72** in **FIG. 9****,** the downlink BIC **54** and uplink BIC **56** are designed to be inserted through a rear side **116** of the enclosure **72.** Referring back to **FIG. 8****,** connector holes **116A, 116B** are disposed on the the midplane interface card **58** in **FIG. 8** show where connectors are provided that are connected to connectors **118** (see **FIGS. 10A** and **10B**) of the downlink BIC **54** and uplink BIC **56** when the downlink BIC **54** and uplink BIC **56** are received are fully inserted into the enclosure **72.** The alignment features **102,** by being provided between the midplane interface card **58** and the midplane support **100** as previously discussed, also provide proper alignment of the connector holes **116A, 116B** to be properly aligned with the connectors **118** in the downlink BIC **54** and uplink BIC **56** when inserted in the enclosure **72.**

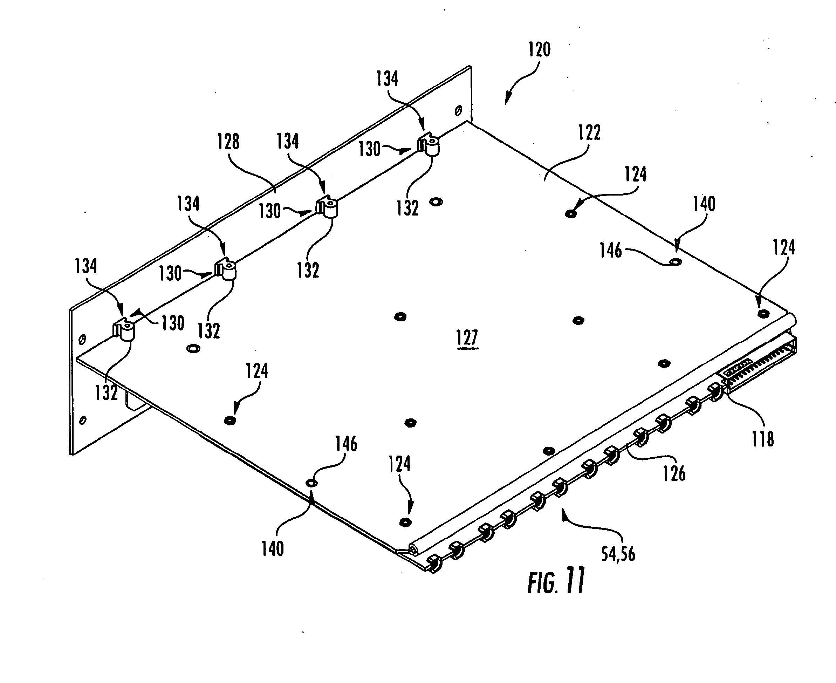

FIGS. **10A** and **10B** illustrate a BIC assembly **120** that supports the downlink BIC **54** or the uplink BIC **56** and is configured to be received in the enclosure **72** to connect the downlink BIC **54** or the uplink BIC **56** to the midplane interface card **58.** The BIC assembly **120** is the same whether supporting the downlink BIC **54** or the uplink BIC **56;** thus, the BIC supported by the BIC assembly **120** in **FIGS. 10A** and **10B** could be either the downlink BIC **54** or the uplink BIC **56.** The BIC assembly **120** includes a BIC support plate **122** that is configured to secure the downlink and uplink BICs **54, 56.** Standoffs **124** are provided to support a BIC PCB **126** of the downlink and uplink BICs **54, 56** above the BIC support plate **122.** A BIC face plate **128** is coupled generally orthogonal to the BIC support plate **122** to secure the downlink and uplink BICs **54, 56** to the enclosure, as illustrated in **FIG. 9****.** Alignment features **130** are provided between the BIC support plate **122** and the BIC face plate **128** to ensure that the BIC PCB **126,** and thus its connector **118,** are properly aligned in the **X** and **Y** directions, as illustrated in **FIG. 9****,** when the downlink and uplink BICs **54, 56** are inserted in the enclosure **72.** Thus, the connector **118** will be properly aligned with the enclosure **72** and thus the connector holes **116A, 116B** on the midplane interface card **58** to allow a proper connection between the downlink and uplink BICs **54, 56** and the midplane interface card **58.** The alignment features **130** will ensure alignment of the BIC PCB **126** as long as the BIC PCB **126** is properly installed on the BIC support plate **122,** which will be described in more detail below. As illustrated on the bottom side **127** of the BIC assembly **120** in **FIG. 11****,** the alignment features 130 in this embodiment are protrusions **132** attached to the BIC support plate **122** that are configured to be disposed through openings **134** disposed through the BIC face plate **128,** as illustrated in **FIG. 10A****.** The downlink or uplink BIC connectors **50, 52** (see also, **FIG. 2**), as the case may be, are disposed through the BIC face plate **128** to allow BTS inputs and outputs to be connected to the downlink and uplink BICs **54, 56,** external to the enclosure **72** when the downlink and uplink BICs **54, 56** are fully inserted in the enclosure **72.**

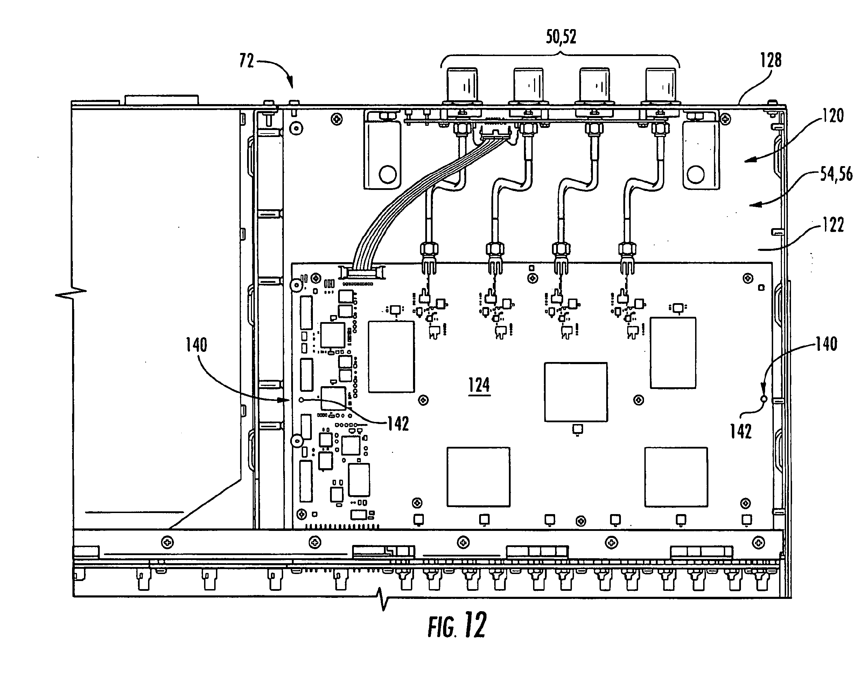

To provide alignment of the BIC PCB **126** to the BIC support plate **122,** alignment features **140** are also disposed in the BIC PCB **126** and the BIC support plate **122,** as illustrated in **FIGS. 10A****,** **10B****,** **11** and **12****.** As illustrated therein, PCB support guide pins **142** are disposed through alignment openings **144, 146** disposed in the BIC PCB **126** and BIC support plate **122,** respectively, when aligned. The alignment openings **144** and **146** are designed to only be aligned to allow the PCB support guide pin 142 to be disposed therein when the alignment openings **144, 146** are in alignment. For example, the tolerances between the alignment openings **144, 146** may be less than .01 inches or less than .005 inches, as examples, to ensure an alignment between the alignment openings **144, 146** before the PCB support guide pins **142** can be disposed through both alignment openings **144, 146.** Any other tolerances desired can be provided.

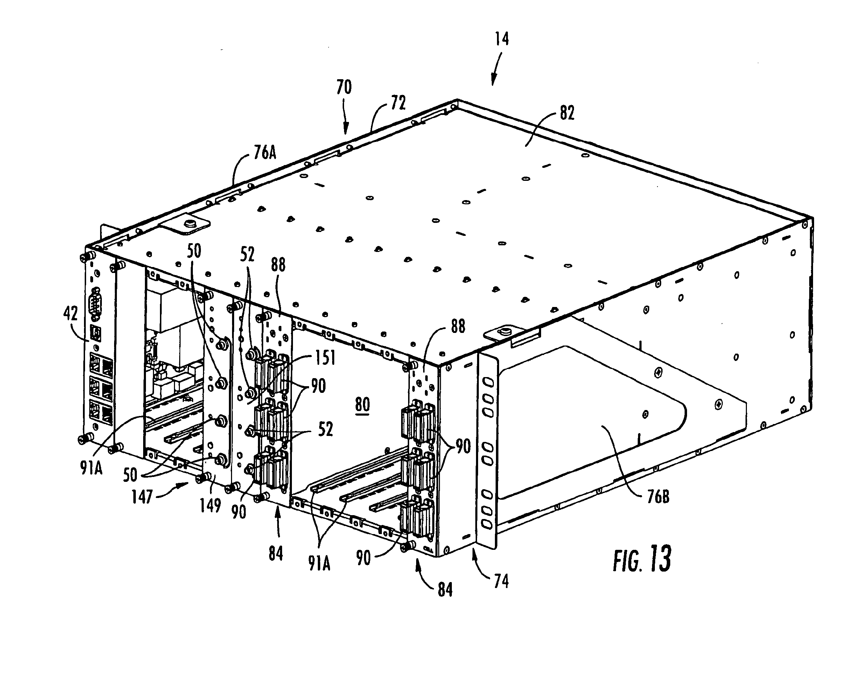

**FIGS. 9-12** described above provide the BIC connectors **50, 52** disposed through the rear side **116** of the enclosure **70.** To establish connections with the BIC connectors **50, 52,** connections are established to the BIC connectors **50, 52** in the rear side **116** of the enclosure **72.** Alternatively, the enclosure **72** could be designed to allow connections to be established to the downlink BIC **54** and the uplink BIC **76** from the front side of the enclosure **72.** In this regard, **FIG. 13** is a side perspective view of the assembly **70** of **FIG. 3** with the downlink BIC connectors **50** for the downlink BIC and the uplink BIC connectors **52** for the uplink BIC **56** disposed through a front side **147** of the enclosure **72.** As illustrated therein, a downlink BIC connector plate **149** containing downlink BIC connectors **50** disposed therein is disposed in the front side **147** of the assembly **70.** Similarly, an uplink BIC connector plate **151** containing uplink BIC connectors **52** disposed therein is also disposed in the front side **147** of the assembly **70.**

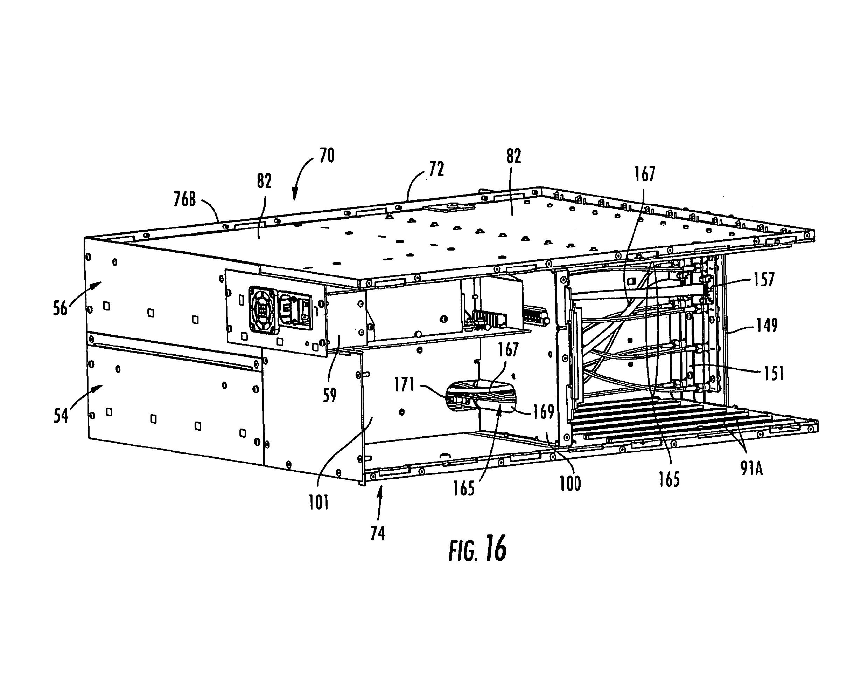

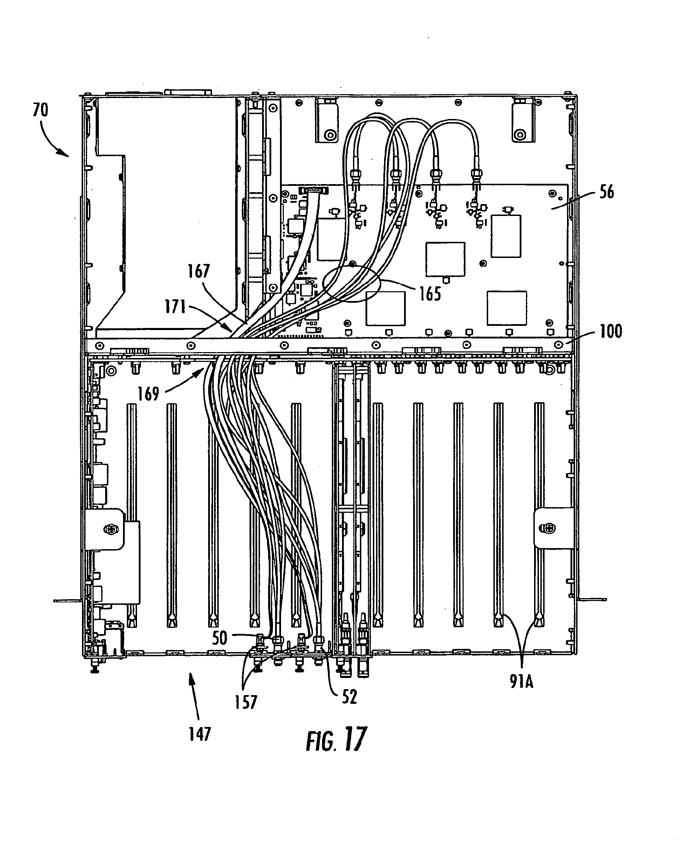

**FIGS. 14** and **15** illustrate front and rear perspective views of an exemplary BIC connector plate, which can be BIC connector plate **149** or **151.** As illustrated therein, the BIC connectors **50** or **52** are disposed through the BIC connector plate **149** or **151** so that the BIC connectors **50** or **52** can be accessed externally through the front side **147** of the assembly **70.** Fasteners **153** can be disposed through openings **155** in the BIC connector plates **149** or **151** to fasten the BIC connector plates **149** or **151** to the assembly **70.** Channel guides **173** are attached to the BIC connector plates **149** or **151** that are configured to be received in the channels **91A, 91B** in the assembly **70** to assist in aligning the BIC connector plates **149** or **151** with the assembly **70** when disposing the BIC connector plates **149** or **151** in the assembly **70.** Because the downlink BIC **54** and uplink BIC **56** are disposed in the rear of the assembly **70,** as illustrated in **FIGS. 9-12****,** the BIC connectors **50** or **52** are provided in the BIC connector plates **149** or **151** to connect the BIC connectors **50** or **52** to the downlink BIC **54** or uplink BIC **56,** as illustrated in **FIG. 15** and as will be described below with regard to **FIGS. 16** and **17****.** Further, a BIC ribbon connector **157** is disposed in the BIC connector plates **149** or **151** to connect to the downlink BIC **54** or uplink BIC **56** to carry status signals regarding the downlink BIC **54** or uplink BIC **56** to be displayed on visual indicators **161** disposed on the BIC connector plates **149** or **151.**

**FIG. 16** is a rear side perspective view of the enclosure **72** illustrating cables **165, 167** connected to the BIC connectors **50, 52** being disposed through an opening **169** in the midplane support **100** and an opening **171** in the divider plate **101.** The cables **165, 167** provide connections between the BIC connectors **50, 52** and the BIC ribbon connector **157** so that the BIC connectors **50, 52** can be disposed in the front side **147** of the assembly **70** with the downlink BIC **54** and the uplink BIC **56** disposed in the rear of the assembly **70.** **FIG. 17** is a top view of the assembly **70** further illustrating the routing of the cables **165, 167** connecting the BIC connectors **50, 52** and BIC ribbon connector **157** through the openings **169, 171** to the downlink BIC **54** and uplink BIC **56.**

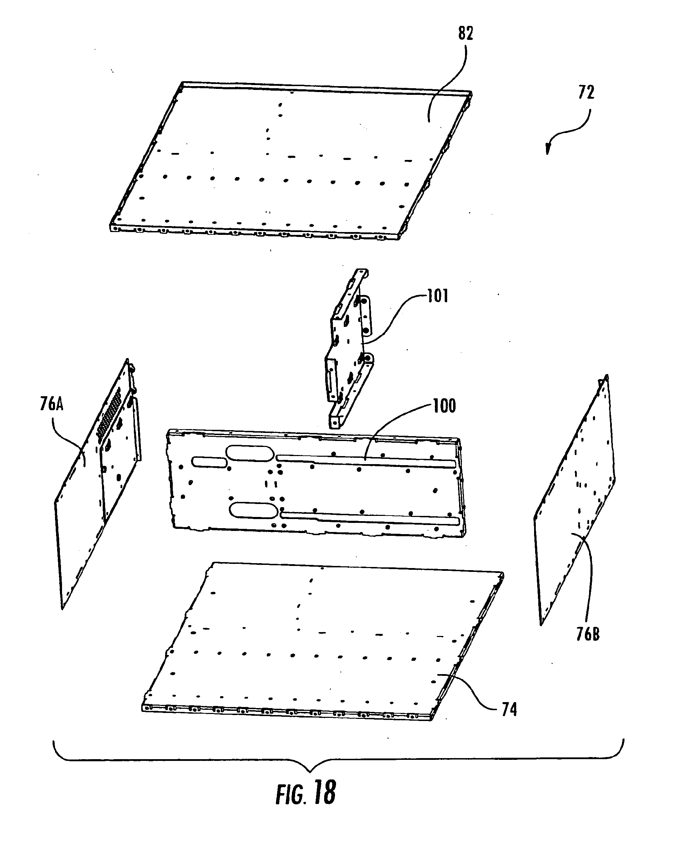

The enclosure **72** is also provided as a modular design to allow the enclosure to be easily assembled and to effect proper alignment between the various plates and components that form the enclosure **72.** For example, **FIG. 18** illustrates a front exploded perspective view of the enclosure **72.** As illustrated therein, the enclosure **72** is formed from the side plates **76A, 76B** being connected to and between the bottom plate **74** and the top plate **82.** The midplane support **100** is configured to be disposed in the datum plane **81** (see **FIG. 5**) of the enclosure **72** when assembled. The divider plate **101** is configured to be attached to the midplane support **100** generally orthogonal to the datum plane **81** to divide compartments for the downlink and uplink BICs **54, 56** and a power module disposed in the HEU **14** on the rear side of the midplane support **100.**

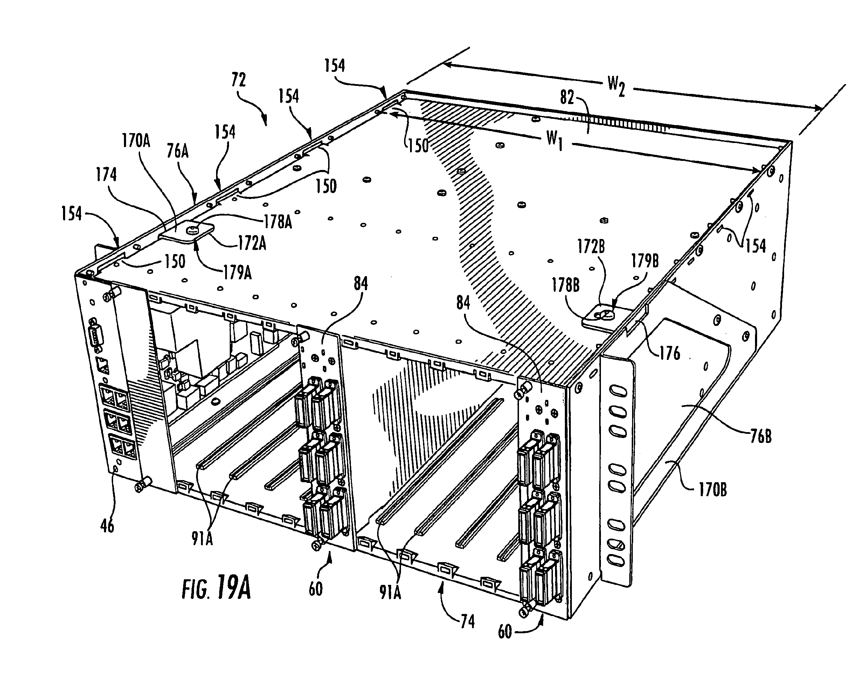

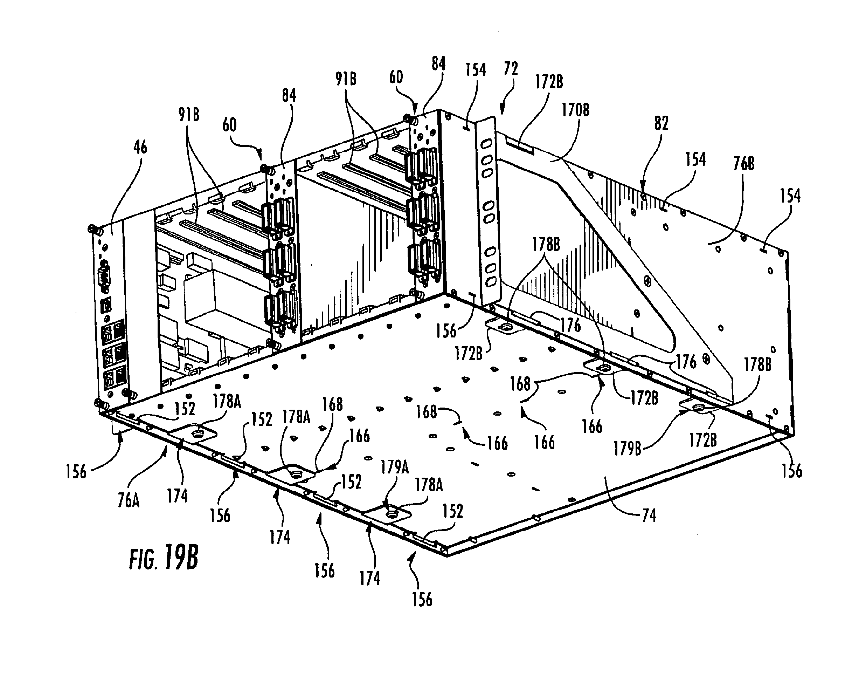

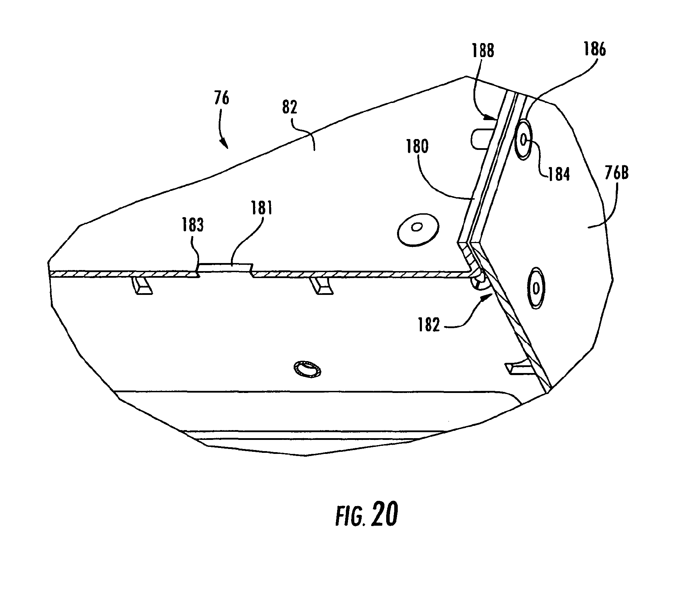

To further illustrate the modularity and ease in assembly of the enclosure **72,** **FIGS. 19A** and **19B** illustrate top and bottom perspective view, respectively, of the enclosure **72** to further illustrate how the side plates **76A, 76B** are attached to the top plate **82** and bottom plate **74.** In this regard, the top and bottom plates **82, 74** include an alignment feature in the form of locating tabs **150, 152.** The locating tabs **150, 152** are integrally formed in the top and bottom plates **74, 82** and are configured to engage with complementary alignment openings or alignment slots **154, 156** integrally disposed in the side plates **76A, 76B.** **FIGS 19A** and **19B** also illustrates a close-up view of the top plate **82** attached to the side plate **76B** and the locating tabs **150** engaged with the alignment slots **154.** This allows the top and bottom plates **74, 82** to be attached in proper alignment quickly and easily with the side plates **76A, 76B** when assembling the enclosure **72.** In the enclosure **72,** there are four (4) locating tabs **150, 152** on each side of the top and bottom plates **82, 74,** and four (4) complementary alignment slots **154, 156** disposed on each side of the side plates **76A, 76B,** although any number of locating tabs and slots desired can be employed. Fasteners can then be employed, if desired to secure the locating tabs **150, 152** within the alignment slots **154, 156** to prevent the enclosure **72** from disassembling, as illustrated in **FIG. 20. FIG. 20** also illustrates a close-up view of the top plate **82** attached to the side plate 76B in this regard.

As illustrated in **FIG. 20****,** the top plate **82** contains rolled or bent up sides **180** that are configured to abut tightly against and a top inside side **182** of the side plate **76B.** The same design is provided between the top plate **82** and the side plate **76A,** and the bottom plate **74** and the side plates **76A, 76B**. An outer width **W₁** of the top and bottom plates **82, 74** is designed such that the fit inside an inner width **W₂** of the side plates **76A, 76B,** as illustrated in **FIG. 19A****.** Fasteners **184** disposed in openings **186** in the side plates **76A, 76B** and openings **188** in the top and bottom plates **82, 74** pull the side plates **76A, 76B** and the top and bottom plates **82, 74** close together tightly to provide a tight seal therebetween. Further, as illustrated in **FIG. 20****,** an alignment tab **181** extending from the midplane support **100** is shown and extends into a slot **183** disposed in the top plate **82** to further align the midplane support **100** with the enclosure **72.**

**FIG. 21** also illustrates alignment features provided in the midplane support **100** that are configured to align the midplane support **100** with the enclosure **72.** As illustrated in **FIG. 21****,** the top plate **82** includes integral alignment slots **160** in the datum plane **81** when the top plate **82** is secured to the side plate **76B.** The side plate **76B** also includes alignment slots **162** integrally disposed along the datum plane **81** when the side plate **76B** is secured to the top plate **82.** The midplane support **100** includes locating tabs **164** that are disposed through the alignment slots **160, 162** when the midplane support **100** is properly aligned with the enclosure **72** and the top plate **82** and side plate **76B** (see also, **FIG. 7**). In this manner, as previously described, when the midplane interface card **58** is properly aligned with the installed midplane support **100,** the midplane interface card **58** is properly aligned with the enclosure **72** and thus any **HEU 14** components installed in the enclosure **72.** Alignment slots **166** similar to alignment slots **160** are also integrally disposed in the bottom plate **74,** as illustrated in **FIG. 19****B.** These alignment slots **166** are also configured to receive locating tabs **168** in the midplane support 100, as illustrated in **FIG. 19B****,** to align the midplane support **100.**

Further, as illustrated in **FIGS. 19A** and **19B****,** the enclosure **72** is also configured to receive and support removable mounting brackets **170A, 170B** to secure the enclosure **72** to an equipment rack. As illustrated therein, the mounting brackets **170A, 170B** include folded down components that form tabs **172A, 172B.** The side plate **76A, 76B** include integral alignment slots **174, 176,** respectively, that are configured to receive the tabs **172A, 172B.** To secure the tabs **172A, 172B** to the enclosure **72,** fasteners **178A, 178B** are disposed through openings **179A, 179B** in the tabs **172A, 172B,** respectively, and secure to the top plate 82 and bottom plate **74.**

Other features are provided to support alignment of components of the HEU **14** and to support proper connection of these components to the midplane interface card **58**. For example, one of these components is the **OIM 84,** as previously discussed. The **OIM 84** is illustrated in **FIG. 22****,** wherein fiber routing guides **190** can be disposed on the outside of the **PCB 86** of the **OIC 60** to assist in routing optical fibers **192** from connector adapters 90 that are configured to connect to optical fibers connected to the RAUs **20** (see **FIG. 2**). The optical fibers **192** are connected to the electronic components of the **OIC 60** to convert the received optical signals from the **RAUs 20** into electrical signals to be communicated to the uplink BIC **56** via connector **194** and RF connectors **195** that are connected to the midplane interface card **58** when the OIM **84** is inserted into the enclosure **72,** as previously discussed.

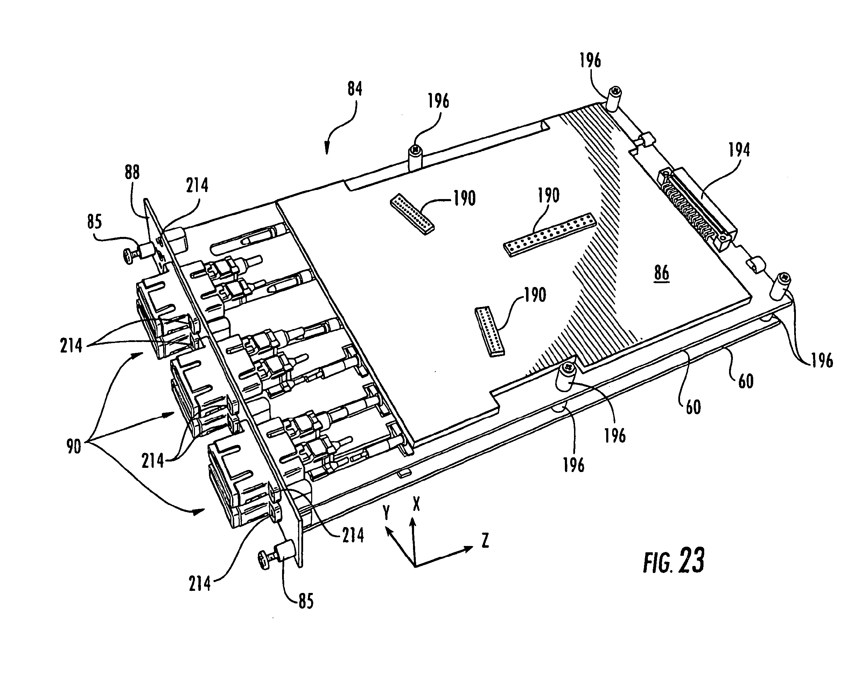

As previously discussed, the OIM **84** includes two OICs **60** connected to the OIM plate **88** to be disposed in channels **91A, 91B** in the enclosure **72.** Also, by providing two OICs **60** per OIM **84,** it is important that the connectors **194** are properly aligned and spaced to be compatible with the alignment and spacing of the complementary connectors **94B** in the midplane interface card **58** (see **FIG. 5**). Otherwise, the OICs **60** may not be able to be properly connected to the midplane interface card **58**. For example, if the PCBs **86** of the OICs **60** are not both secured in proper alignment to the OIM plate **88,** as illustrated in **FIG. 23****,** one or both OICs **60** may not be aligned properly in the **Z** direction.

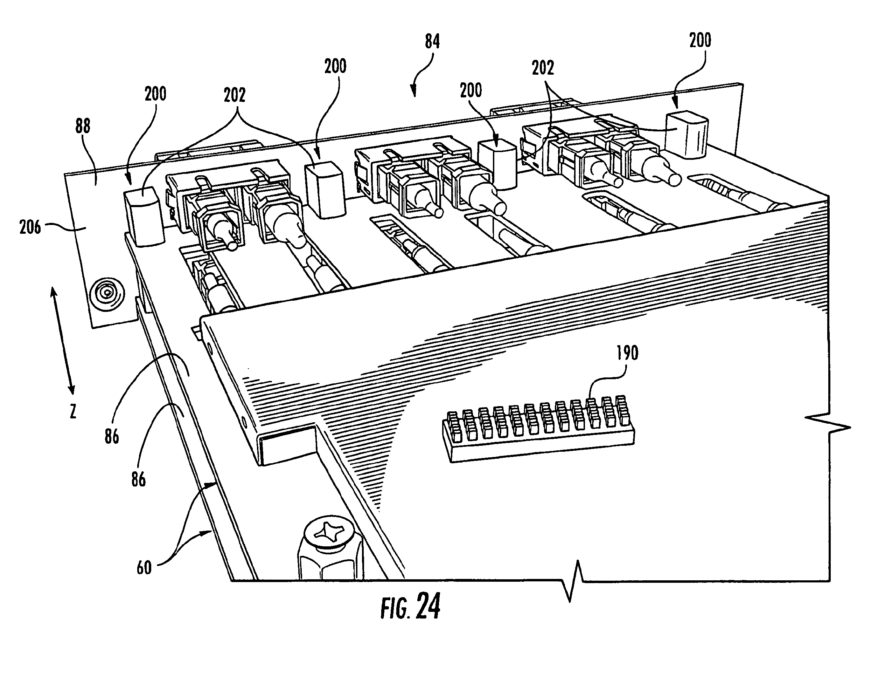

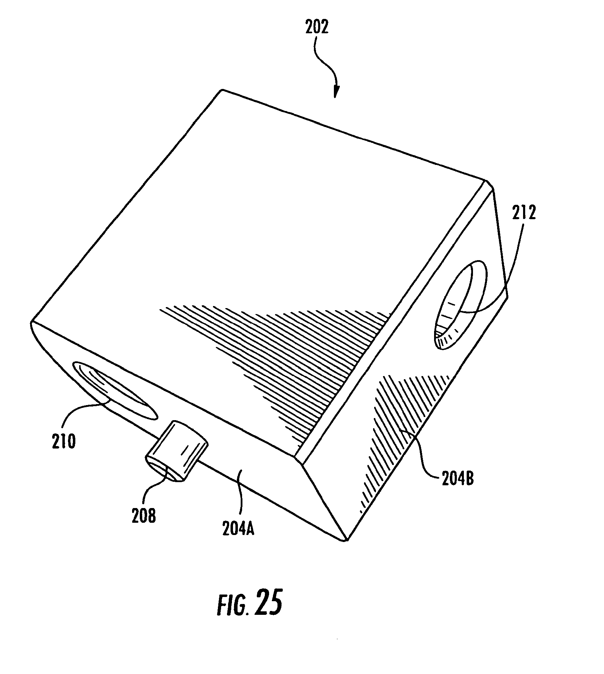

In this regard, **FIG. 24** illustrates an alignment feature **200** to ensure that the PCBs **86** of the OICs **60** are properly secured and aligned with regard to the OIM plate **88** in the **Z** direction. As illustrated in **FIG. 24** and more particularly in **FIG. 25****,** an alignment block **202** is provided. As illustrated in **FIG. 25****,** the alignment block **202** includes two alignment surfaces **204A, 204B.** As illustrated in **FIG. 24** and **25****,** alignment surface **204A** is configured to be disposed against the surface of the PCB **86.** Alignment surface **204B** is configured to be disposed against a rear surface **206** of the OIM plate **88,** as also illustrated in **FIG. 24****.** As illustrated in **FIG. 25****,** guide pin **208** extends from the alignment surface **204A** that is configured to be disposed in an opening in the PCB **86** of the OICs **60.** An opening **210** disposed in the alignment surface 204A is configured to align with an opening disposed in the PCB **86** wherein a fastener can be disposed therein and engaged with the opening **210** to secure the PCB **86** to the alignment block **202**. To align the alignment block **202** to the PCB **86,** the guide pin **208** is aligned with an opening in the PCB **86** and inserted therein when aligned.

The alignment surface **204B** also contains an opening **212** that is configured to receive a fastener **214** (**FIG. 23**) disposed through the OIM plate **88** and engage with the opening **212.** Some of the fasteners **214** may be configured to also be disposed through openings in the connector adapters **90,** as illustrated in **FIG. 23****,** to secure both the connector adapters **90** to the OIM plate **88** and the OIM plate **88** to the OICs **60**. In this manner, the OIM plate **88** is secured to the alignment block **202,** and the alignment block **202** is aligned and secured to the PCB **86.** Thus, the OIM plate **88** is aligned with the PCB **86** of the OIC **60** in the **Z** direction.

Further, when tolerances are tight, it may be difficult to ensure proper mating of all connectors **194,** 94B between the OICs **60** and the midplane interface card **58.** For example, as illustrated in FIG. **23****,** if the spacing between standoffs **196** securing and spacing apart the PCBs **86** of the OICs **60** is not the same as the spacing between connectors **94B** in the midplane interface card **58,** alignment of the OICs **60** in the **X, Y,** or **Z** directions may not be proper, and thus only one or neither OIC **60** may be able to be connected to the midplane interface card **58** and/or without damaging the midplane interface card **58** and/or its connectors **94B.**

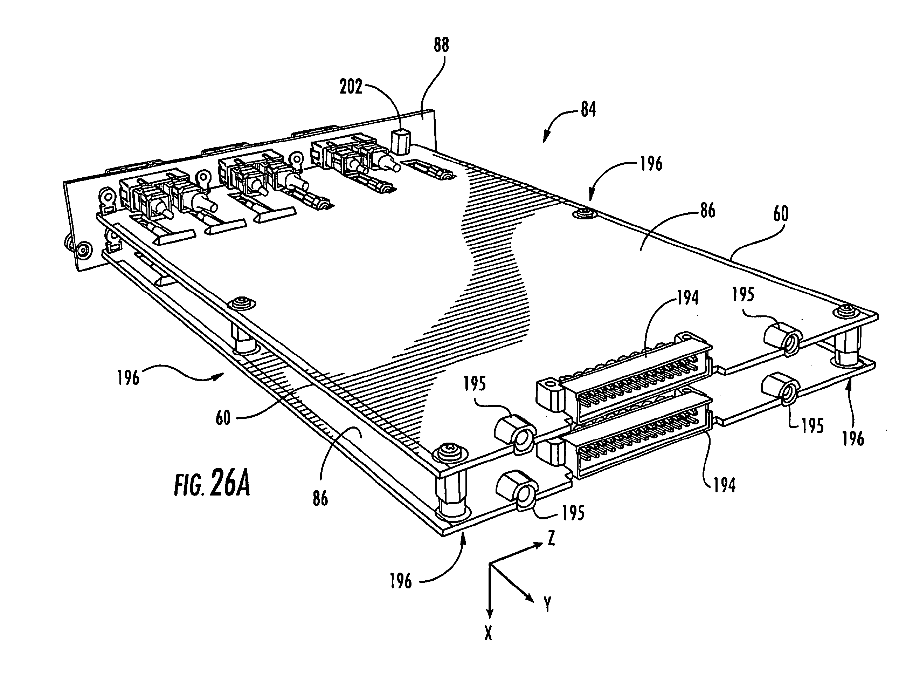

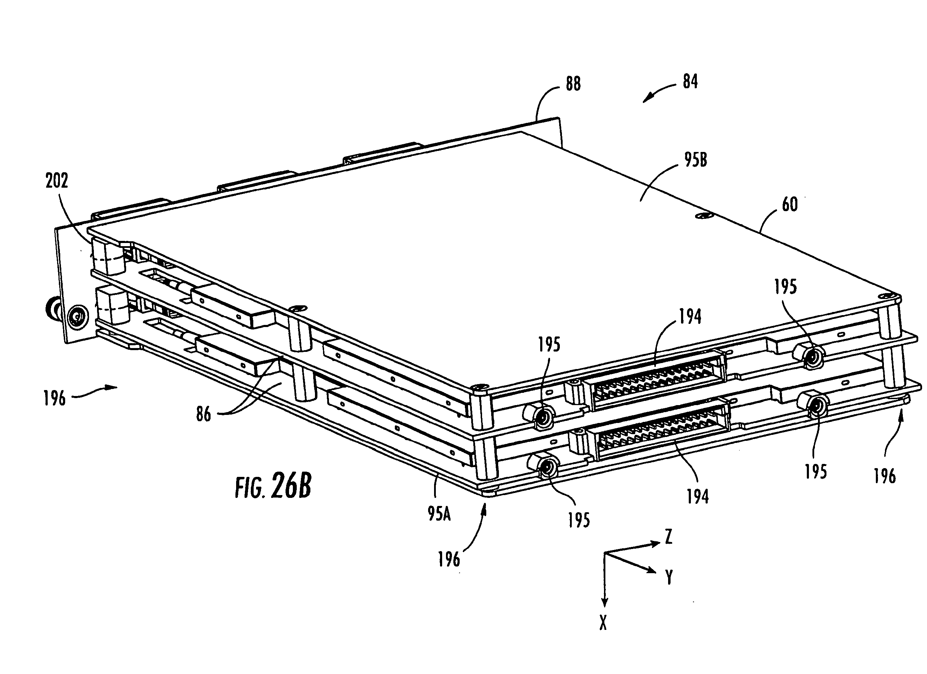

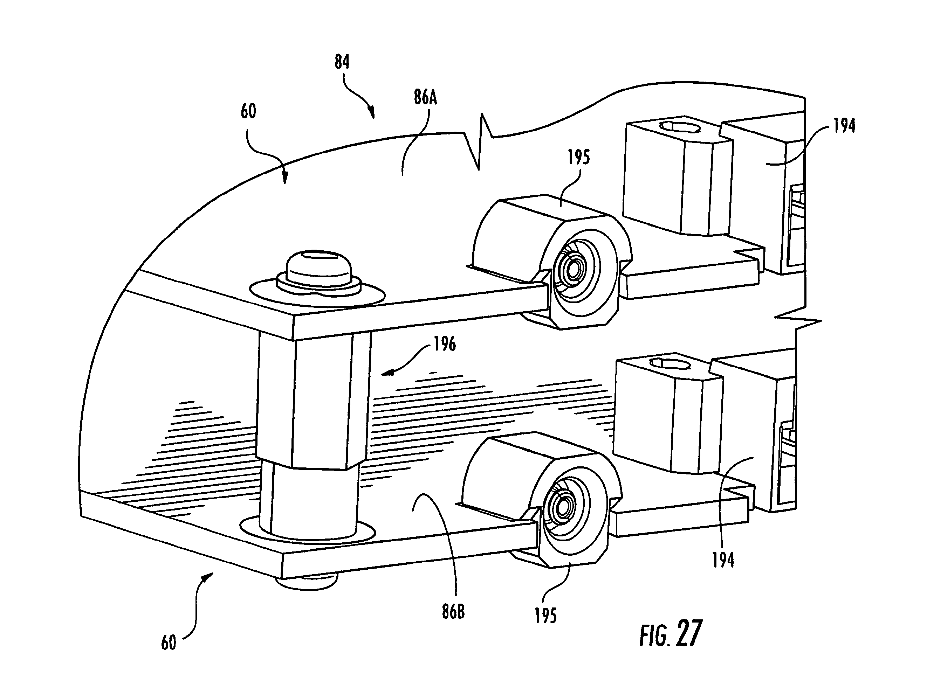

In this regard, **FIG. 26A** illustrates a rear perspective view of the OIM **84** of **FIGS. 23** and **24** with standoffs **196** provided between the two PCBs **86** of the OICs **60** that allow one PCB **86** to float with regard to the other PCB **86**. **FIG. 26B** illustrates a rear perspective view of the OIM **84** of **FIG. 26A** within optional shield plates **95A, 95B** installed to the PCBs **86** and to the OIM plate **88** to provide mechanical, **RF**, and other electromagnetic interference shielding. In this regard, tolerances are eased when the OICs **60** are secured to the OIM plate **88** to allow one connector **194** of an OIC **60** to move or float slightly in the **X, Y,** or **Z** directions with regard to the other OIC **60,** as illustrated in **FIGS. 26A** and **26B**. **FIG.27** illustrates a close-up view of one standoff **196** between two PCBs **86A, 86B** of the OICs **60.** As will be described in more detail below, the standoff **196** is allowed to float about the top PCB **86A** to allow the positioning or orientation of the top PCB **86A** to move slightly in the **X, Y,** or **Z** directions with regard to the bottom PCB **86B.**

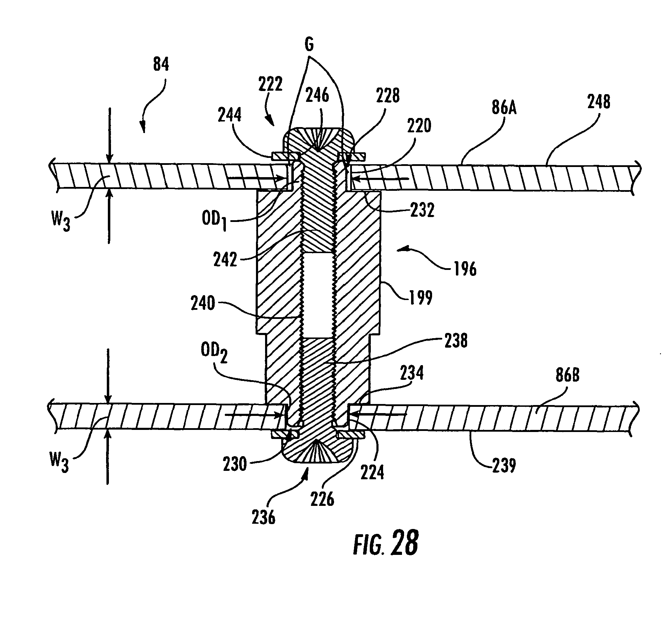

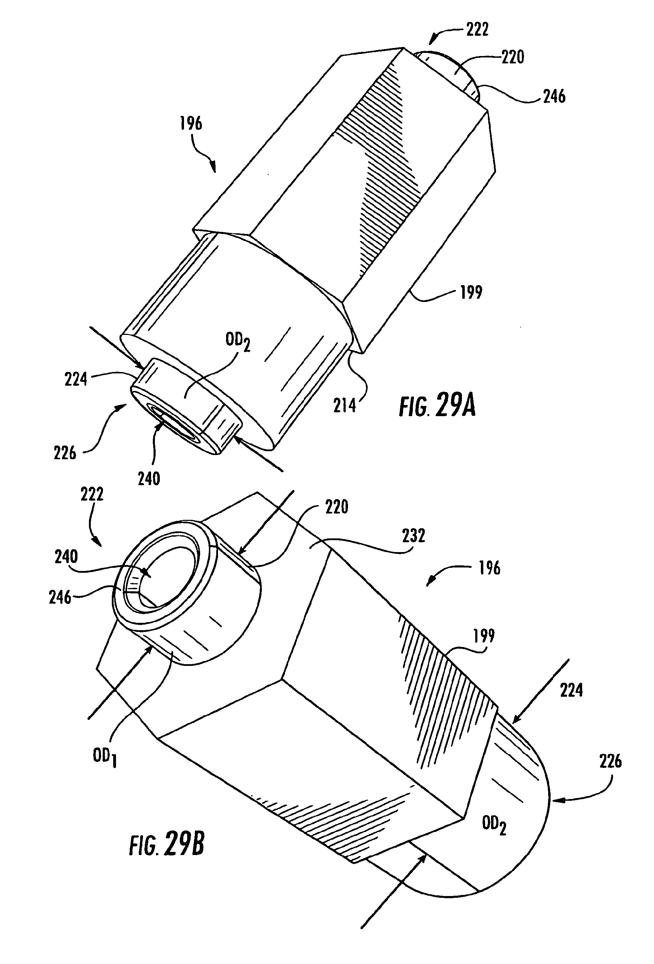

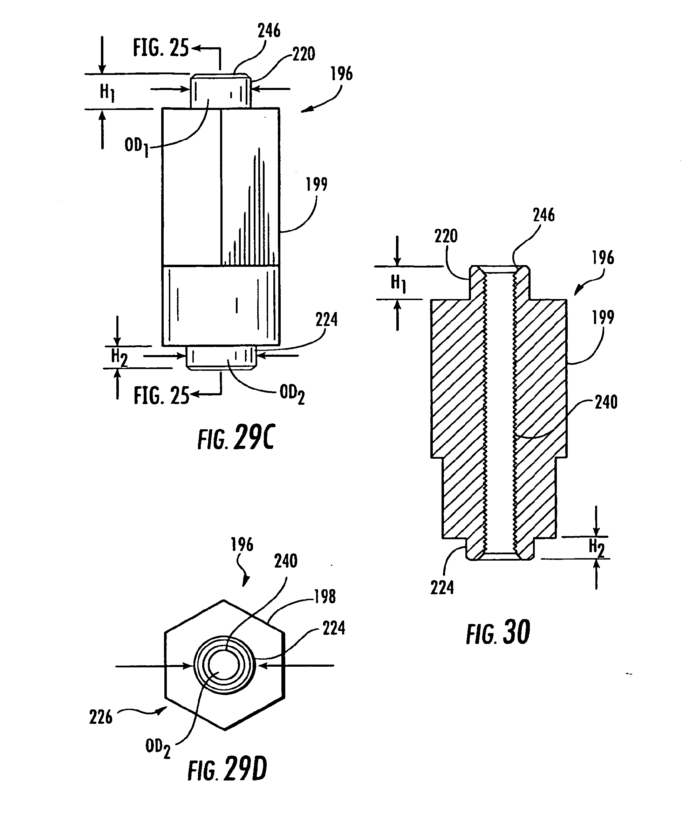

**FIG. 28** is a side cross-sectional view of the top and bottom PCBs **86A, 86B** of the OIM **84** mounted to each other with the standoff 196, as illustrated in **FIGS. 26A** and **26B** and **28,** to further illustrate the floating top PCB **86A**. In this regard, the standoff **196** is comprised of a body **199.** The body **199** of the standoff **196** is also illustrated in the perspective, side and top view of the standoff in **FIGS. 29A-29C****,** respectively. The body **199** includes a first collar **220** at a first end **222** of the body **199** of an outer diameter **OD₁** than is smaller than an outer diameter **OD₂** of a second collar **224** located at a second end **226** of the body **199,** as illustrated in **FIG. 28-30****.** The first and second collars **220, 224** are configured to be received within openings **228, 230** of the top and bottom PCBs **86A, 86B,** as illustrated in **FIG. 28****.** The first end **222** and second end **226** of the body **199** contains shoulders **232, 234** that limit the amount of disposition of the first and second collars **220, 224** through the openings **228, 230** in the top and bottom PCBs **86A, 86B**.

As illustrated in **FIG. 28****,** the second collar **224** is designed so that the outer diameter **OD₂** includes a tight tolerance with the inner diameter of the opening **230.** In this manner, the second collar **224** will not float within the opening **230.** Further, a height **H₂** of the second collar **224** (see **FIG.29C**) is less than a width **W₃** of the **PCB 86A** and opening **230** disposed therein, as illustrated in **FIG. 28****.** This allows a head **236** of a fastener **238** to be secured directly onto the outer surface **239** of the bottom PCB **86B** when disposed through a threaded shaft **240** of the body **199** to firmly secure the standoff **196** to the bottom PCB **86B**. Because of the outer diameter **OD₂** and height **H₂** provided for the second collar **224** of the standoff **196,** the bottom PCB **86B** does not float.

However, to allow the top PCB **86A** to float, the outer diameter **OD₁** and height **H₁** of the first collar **220** is different from that of the second collar **224.** In this regard, as illustrated in **FIGS. 28-29C** and **30,** the outer diameter **OD₁** of the first collar **220** is smaller than the inner diameter of the opening **228.** A gap **G** is formed therebetween to allow the first collar **220** to move slightly with respect to the opening **228** when disposed therein. Further, the height **H₁** of the first collar **220** is taller than the width **W₁** of the top PCB **86A,** as illustrated in **FIG. 28****.** Thus when a fastener **242** is disposed within the threaded shaft **240** and tightened, a head **244** of the fastener **242** will rest against a top surface **246** of the first collar **220.** Because the first collar **220** extends in a plane about a top surface **248** of the top PCB **86A,** the head **244** of the fastener **242** does not contact the top surface **248** of the PCB **86A.** Thus, when the fastener **242** is tightened, a friction fit is not provided between the head **244** and the top surface **248** of the PCB **86A,** allowing the top PCB **86A** to float with respect to the standoff 196 and the bottom PCB **86B**.

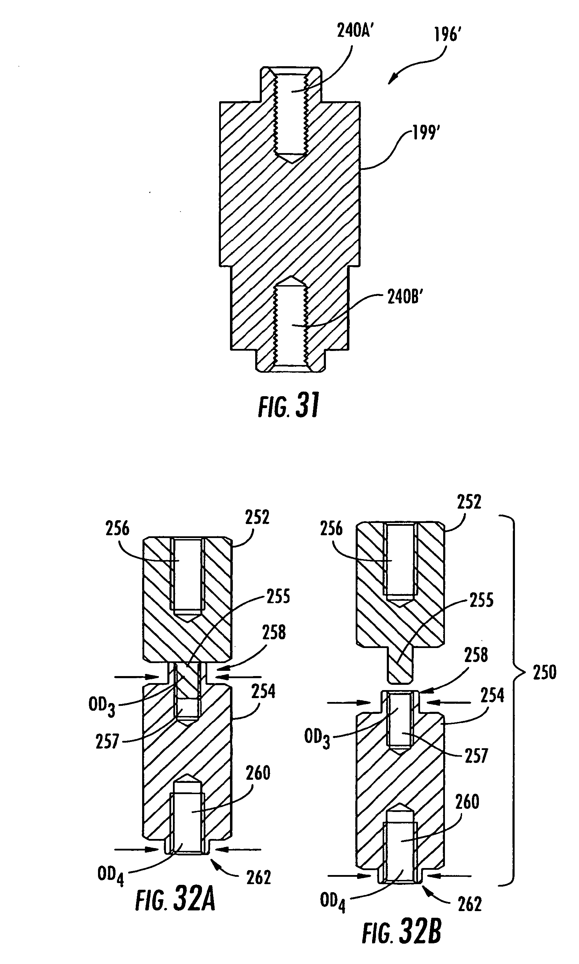

**FIG. 31** illustrates an alternative standoff **196'** that is the same as the standoff 196, but the thread shaft does not extend all the way through the body **199'** like the standoff **196** in **FIG. 30**. Instead, the thread shafts **240A', 240B'** are separated. The standoff **196'** can still be employed to provide the floating PCB **86** features discussed above. Also note that the standoffs **196, 196'** configured to allow a PCB to float can also be provided for the standoffs **196, 196'** provided to install any other components of the HEU **14,** including but not limited to the downlink BIC **54** and the uplink BIC **56**. Further, the design of the bodies **199, 199'** may include a hexagonal outer surface over the entire length of the bodies **199, 199'.**

**FIGS. 32A** and **32B** are side cross-sectional views of an alternative standoff **250** that can be employed to secure the OIC PCBs **86** and provide one of the OIC PCBs **86** as a floating PCB. The alternative standoff **250** may be employed to secure the OIC PCBs **86** when the shield plates **95A, 95B** are installed, as illustrated in **FIG. 26B**. In this regard, one standoff **252** is configured to be disposed within another standoff **254.** The first standoff **252** contains a thread shaft **256** that is configured to receive a fastener to secure a shield plate **95** to the standoff **252** and the OIM **84.** The standoff **252** contains a threaded member **255** that is configured to be secured to a threaded shaft **257** disposed in the standoff **254** The standoff **254** contains a collar **258** similar to the collar **220,** as described above in **FIGS. 28-29B****,** that surrounds the threaded shaft **257** and is configured to be received inside an opening of an OIC PCB **86** having a greater inner diameter than the outer diameter **OD₃** of the collar **258.** This allows an OIC PCB **86** disposed on the collar **258** to float with respect to another OIC PCB **86** secured to a thread shaft **260** of the standoff **254.** The standoff **254** has a collar **262** having an outer diameter OD₄ that is configured to be received in an opening in an OIC PCB **86** that does not allow float.

Another alignment feature provided by the embodiments disclosed herein is alignment assistance provided by the digital connectors disposed in the midplane interface card **58** that accept digital connections from the OICs **60**, the downlink BIC **54**, and the uplink BIC **56**. As previously discussed and illustrated, digital connectors, including connectors **94B**, disposed in the midplane interface card **58** receive complementary digital connectors **194** from the OICs **60**, the downlink BIC **54**, and the uplink BIC **56** when inserted into the enclosure **72**. The OICs **60**, the downlink BIC **54**, and the uplink BIC **56** are designed such that their digital connections are first made to corresponding digital connectors disposed in the midplane interface card **58** when inserted into the enclosure **72** before their RF connections are made to RF connectors disposed on the midplane interface card **58**. In this manner, these digital connections assist in aligning the OICs **60**, the downlink BIC **54**, and the uplink BIC **56** in the X and Y directions with regard to the midplane interface card 58.

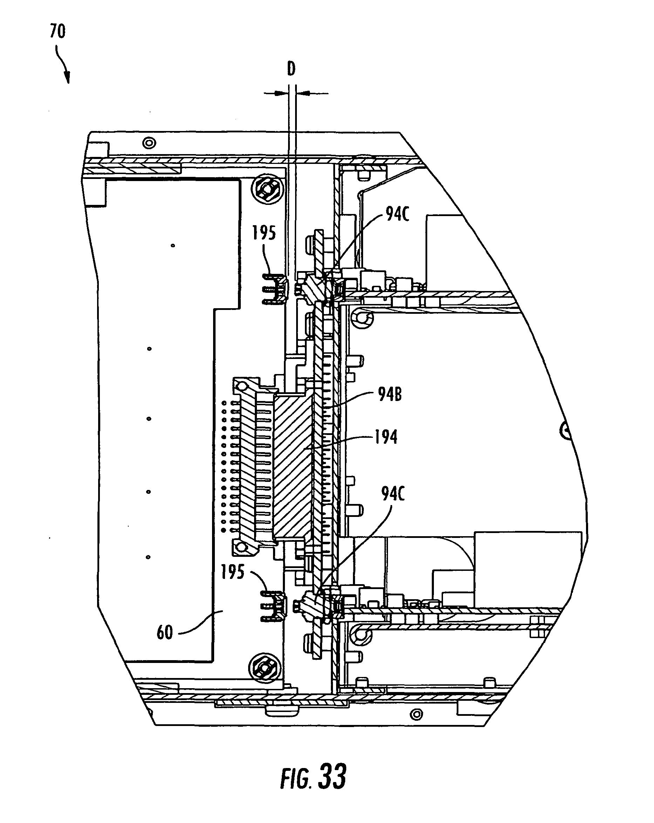

In this regard, FIG. **33** illustrates a side view of the assembly **70** showing a digital connector **194** from an OIC **60** being connected to a complementary connector **94B** disposed in the midplane interface card **58**. As illustrated therein, the digital connector **194** disposed in the OIC **60** is designed such that the digital connector **194** makes a connection with the complementary connector **94B** in the midplane interface card **58** before an RF connector **195** disposed in the OIC **60** makes a connection with the complementary RF connector **94C** disposed in the midplane interface card **58**. In this regard, when the digital connector **194** begins to connect with the complementary connector **94B**, the digital connector **194** aligns with the complementary connector **94B**. The end of the RF connector **195** in the OIC **60** is still a distance **D** away from the complementary RF connector **94C**. In one non-limiting embodiment, the distance **D** may be 0.084 inches. Because the digital connectors **194** on the OICs **60** are in a fixed relationship to the RF connectors 195 provided therein in this embodiment, alignment of the digital connectors **194** also provides alignment of the RF connectors **195** of the OICs **60** to the complementary RF connectors **94C** disposed in the midplane interface card **58** as well. Thus, as the digital connector **194** is fully inserted in the complementary connector **94B**, the RF connector **195** will be aligned with the complementary RF connector **94C** when disposed therein. Alignment of the RF connector **195** may be important to ensure efficient transfer of RF signals. This feature may also be beneficial if the RF connections require greater precision in alignment than the digital connections. The same alignment feature can be provided for the downlink BIC **54** and uplink BIC **56.**

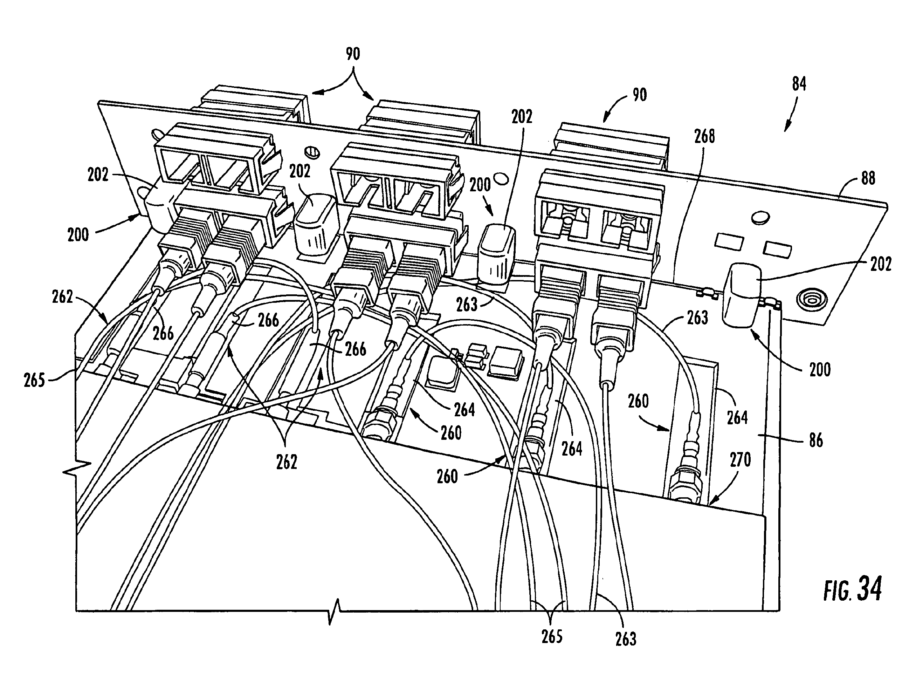

As previously discussed and illustrated in **FIG. 4****,** the OIM plate **88** provides support for the connectors **90** and for attaching the OICs **60** to the OIM plate **88** to provide alignment of the OICs **60** when inserted into the enclosure **72.** An OIM plate **88** is provided to assist in coupling a pair of OICs **60** together to form the OIM **84.** The OIM plate **88** serves to support the OICs **60** and contributes to the alignment the OICs **60** for proper insertion into and attachment to the enclosure **72**, which in turn assists in providing a proper and aligned connection of the OICs **60** to the midplane interface card **58.** In this regard, as illustrated in **FIG. 34****,** one feature that can be provided in the OIM **84** to allow the OIM plate **88** to be provided in embodiments disclosed herein is to provide an OIC PCB **86** that extends beyond receiver optical sub-assemblies (ROSAs) and transmitter optical sub-assemblies (TOSAs) provided in the OIC **60.**

As illustrated in **FIG. 34****,** a top perspective view of the OIM **84** is provided illustrating the extension of OIC PCBs **86** beyond transmitter optical sub-assemblies (TOSAs) **262** and receiver optical sub-assemblies (ROSAs) **260.** The TOSAs **262** and ROSAs **260** are connected via optical fibers **263, 265** to the connectors **90** that extend through the OIM plate **88** to allow connections to be made thereto. By extending the OIC PCBs beyond the TOSAs **262** and ROSAs **260,** the OIM plate **88** can be secured to the OIC PCBs **86** without interfering with the TOSAs **262** and ROSAs **260.** In this embodiment, the TOSAs **262** and ROSAs **260** are mounted or positioned on an end of a PCB to transmit and/or receive optical signals interfaced with electrical signal components disposed in the OIC PCB **86.** Mounting or positioning of TOSAs **262** and ROSAs **260** on the end of a PCB may limit the length of exposed, unshielded wire extensions between the TOSAs **262** and ROSAs **260** and printed traces on the PCB. This provides for signal integrity of the signals after conversion to electrical signals.

Thus, a sufficient space is provided to allow for the TOSAs **262** and ROSAs **260** to extend beyond an end of a PCB. In this regard, openings **264, 266** are disposed in the OIC PCB **86** in this embodiment. The openings **264, 266** allow the TOSAs **262** and ROSAs **260** to be disposed in the OIC PCB **86** without the TOSAs **262** and ROSAs **260** extending beyond an end **268** of the OIC PCB **86** where the OIM plate **84** is disposed. Thus, the openings **264, 266** allow the TOSAs **262** and ROSAs **260** to be disposed at an end **270** of the PCB where the openings **264, 266** start, but not at the end **268** of the OIC PCB **86** where the OIM plate **88** is located. In this manner, space is provided for the TOSAs **262** and ROSAs **260** such that they do not interfere with or prevent the OIM plate 88 from being disposed at the end **268** of the OIC PCB 86.

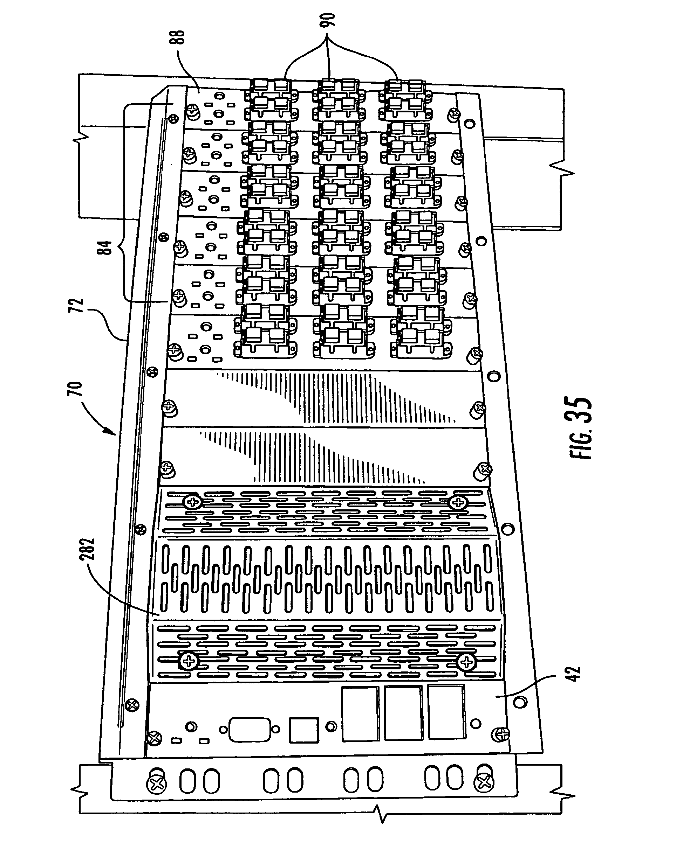

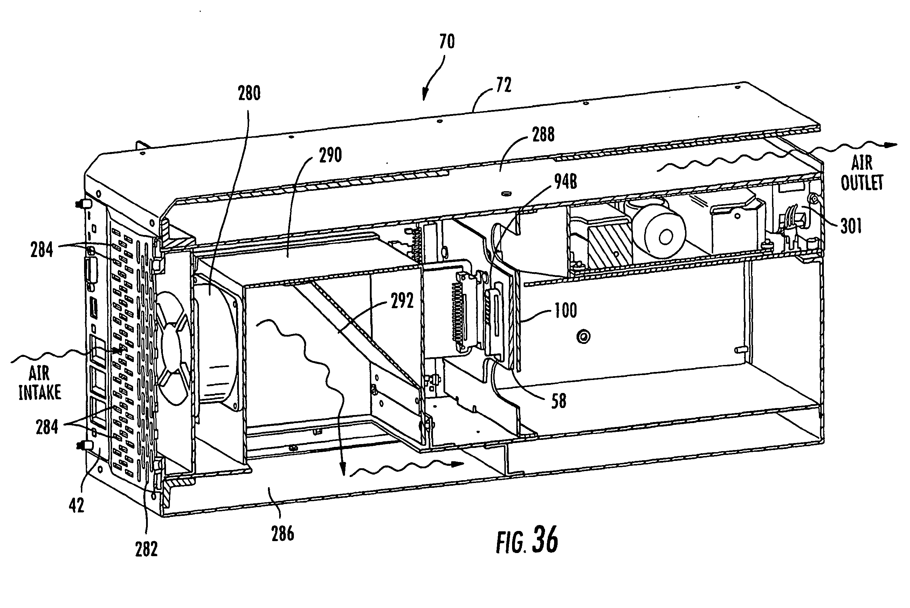

It may also be desired to provide a cooling system for the assembly **70**. The components installed in the assembly **70,** including the downlink BIC **54,** the uplink BIC **56,** the HEC **42,** and the OICs **60** generate heat. Performance of these components may be affected if the temperature due to the generated heat from the components is not kept below a threshold temperature. In this regard, **FIGS. 35** and **36** illustrate the assembly **70** and enclosure **72** of **FIG. 3** with an optional cooling fan **280** installed therein to provide cooling of components installed in the enclosure **72.** View of the cooling fan **280** is obscured by a cooling fan protector plate **282** in front perspective view of the assembly **70** in **FIG. 35****;** however, **FIG. 36** illustrates a side cross-sectional view of the assembly **70** and enclosure **72** showing the cooling fan **280** installed in the enclosure **72** behind the cooling fan protector plate **282** attached to the enclosure **72.** In this embodiment, cooling is provided by the cooling fan **280** taking air into the enclosure **72** through openings **284** disposed in the cooling fan protector plate **282** and drawing the air across the components in the enclosure **72,** as will be described in more detail below. The air may be pushed through the rear of the enclosure **72** through an air outlet, as illustrated in **FIG. 36****.** For example, the cooling fan **280** may be rated to direct air at a flow rate of sixty **(60)** cubic feet per minute (CFM) or any other rating desired.

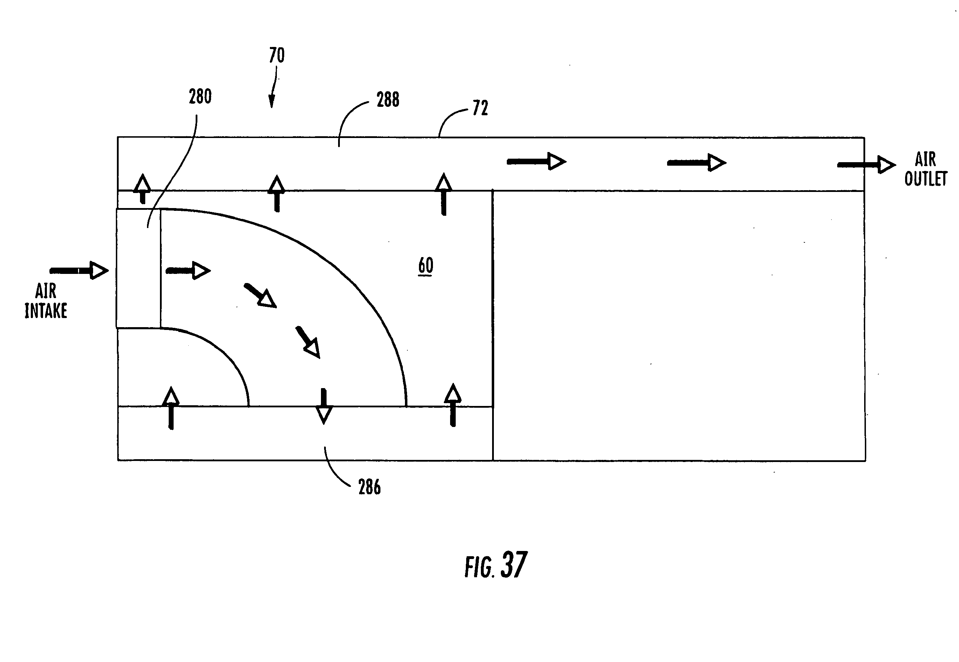

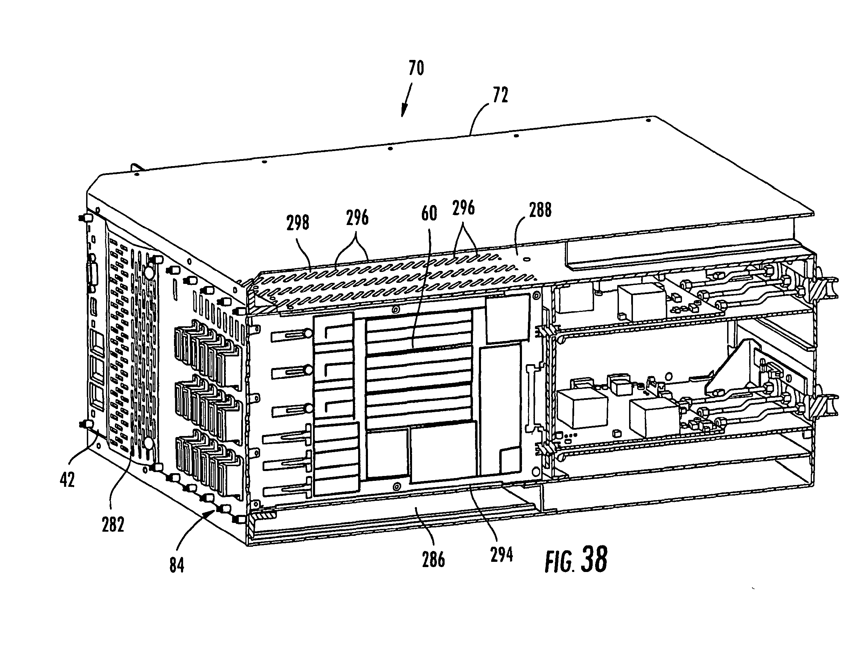

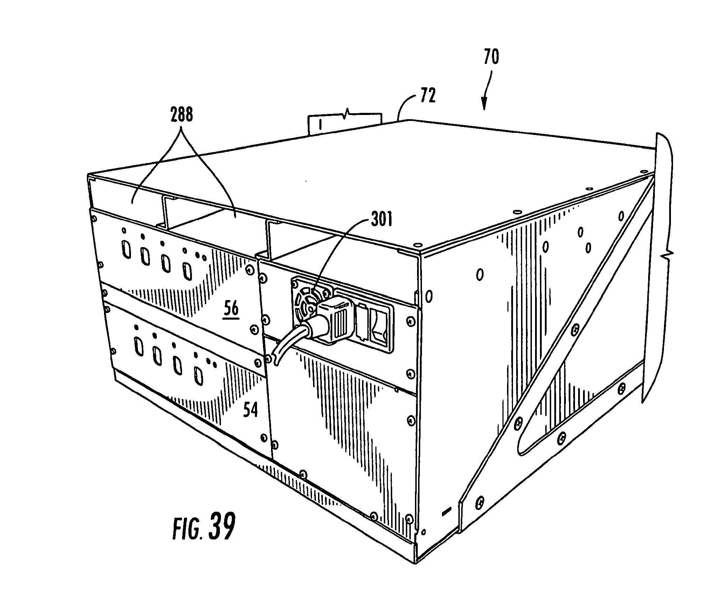

With continuing reference to **FIG. 36****,** a lower plenum **286** and an upper plenum **288** is provided in the enclosure **72.** The lower plenum **286** is provided to direct air pulled in the enclosure **72** by the cooling fan **280** initially to the bottom of the enclosure **72** to allow the air to then be directed upward through OICs **60** installed in the enclosure **72** and to the upper plenum **288** to be directed to the rear and outside of the enclosure **72.** Passing air across the OICs **60** cools the OICs **60**. This air flow design is further illustrated in the air flow diagram of **FIG. 37****.** In this regard, with reference to **FIG. 36****,** a fan duct **290** is provided behind the cooling fan **280** to direct air drawn into the enclosure **72** by the cooling fan **280.** A plate **292** is installed in the fan duct **290** to direct air flow down from the fan duct **290** into the lower plenum **286.** The air from the lower plenum **286** passes through openings disposed in a lower plenum plate **294** and then passes through the openings disposed between OICs **60** wherein the air then passes through openings **296** disposed in an upper plenum plate **298,** as illustrated in **FIG. 38****.** In this manner, air is directed across the OICs **60** to provide cooling of the OICs **60.** Air then entering into the upper plenum **288** is free to exit from the enclosure **72,** as illustrated in **FIG. 36****.** The upper plenum **288** is open to the outside of the enclosure **72** through the rear of the enclosure **72**, as illustrated in **FIGS. 36** and **37** and in **FIG. 39****.**

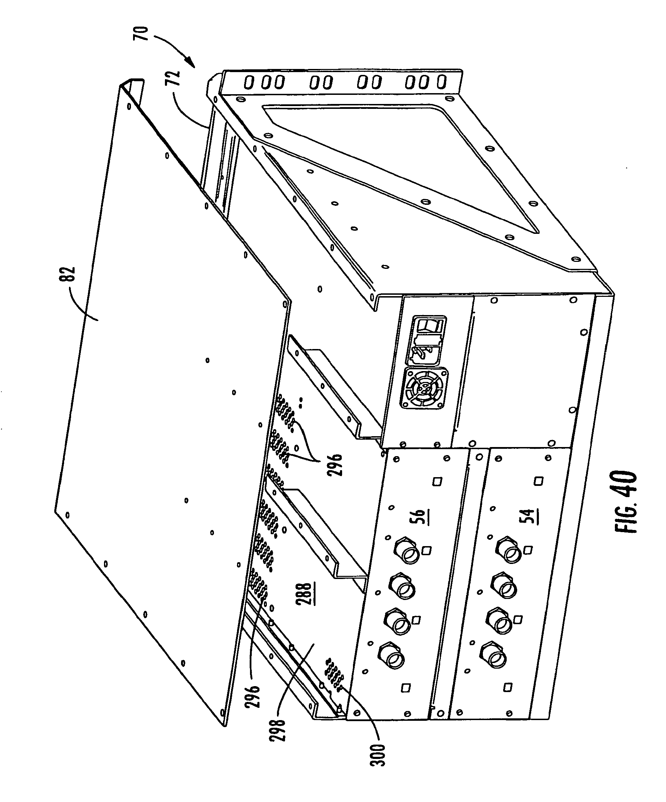

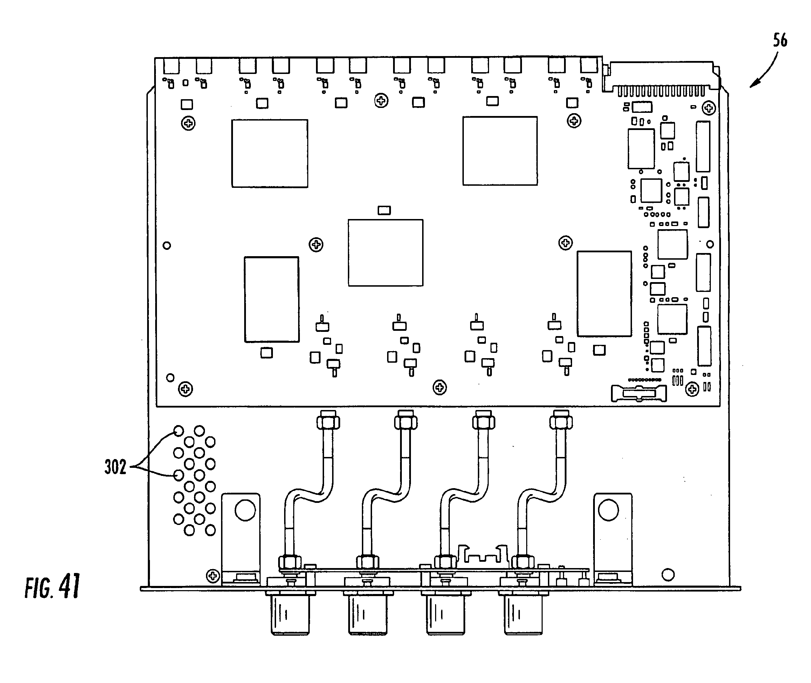

Further, as illustrated in **FIGS. 40** and **41****,** openings **300** and **302** can also be disposed in the upper plenum plate **298** above the uplink BIC **56** and in the downlink BIC **54** to provide further movement of air for cooling purposes. These openings **300, 302** allow some of the air flowing into the enclosure **72** from the cooling fan **280** to be drawn from the lower plenum **286** into the downlink BIC **54** and then into the uplink BIC 56 via openings **302.** Air can then be directed from the uplink **BIC 56** through openings **300** and into the upper plenum **288** outside of the enclosure **72.**

Further, as illustrated in **FIGS. 36****,** **39****,** and **41** an optional second cooling fan 301 is provided below the upper plenum plate **298.** In this manner, some of the air from the enclosure **72** is drawn through the power supply **59** by the second cooling fan **301** to provide cooling of the power supply **59.** For example, the second cooling fan **301** may be rated to direct air at a flow rate of thirteen (13) cubic feet per minute (CFM) or any other rating desired.

Many modifications and other embodiments set forth herein will come to mind to one skilled in the art to which the embodiments pertain having the benefit of the teachings presented in the foregoing descriptions and the associated drawings. Therefore, it is to be understood that the description and claims are not to be limited to the specific embodiments disclosed . For example, the embodiments disclosed herein can be employed for any type of distributed antenna system, whether such includes optical fiber or not.

Although specific terms are employer herein, the are used in a generic and descriptive sense only and not for purposes of limitation.

## Claims

1. A communications assembly, comprising:
an enclosure (72);
a communications board (60) having a first end and a second end opposite the first end, and further comprising at least one radio-frequency connector (195) disposed at the first end of the communications board (60) and at least one digital connector (194) disposed at the first end of the communications board (60);
an interface printed circuit board card having at least one complementary radio-frequency connector (94C) disposed on the interface printed circuit board card and at least one complementary digital connector (94B) disposed on the interface printed circuit board card (58);
wherein the radio-frequency connectors (195, 94C) are designed to receive radio-frequency connections and the digital connectors (94B) are designed to receive digital connections;
**characterized in that**
when the interface printed circuit board card is inserted into the enclosure (72) the at least one digital connector (194) engages the at least one complementary digital connector (94), prior to the at least one radio-frequency connector (195) engaging the at least one complementary radio-frequency connector (94C) and thereby aligning the at least one radio-frequency connector (195) with the at least one complementary radio-frequency connector (94C) by placing the at least one radio-frequency connector (195) in an appropriate relative position to the at least one complementary radio-frequency connector (94C).

2. The communications assembly of claim 1, wherein the at least one radio-frequency connector (195) extends a first distance beyond the first end of the communications board (60).

3. The communications assembly of claim 2, wherein the at least one digital connector (194) extends a second distance greater than the first distance beyond the first end of the communications board (60).

4. The communications assembly of claim 3, wherein the difference between the first distance and the second distance is less than 0.1 inches.

5. The communications assembly of claims 1 and 4, wherein the interface printed circuit board card is comprised of a midplane interface card (58).

6. The communications assembly of claim 5, wherein the midplane interface card (58) is mounted to a midplane support (100) mounted in a housing configured to support the midplane interface card (58) in a datum plane of the housing.

7. The communications assembly of claim 6, further comprising at least one alignment feature (102) disposed in the midplane support (100) configured to engage the midplane interface card (58) to align the midplane interface card (58) with the midplane support (100) in at least two dimensions of the housing.

8. The communications assembly of claim 7, wherein the at least one alignment feature (102) is comprised of at least two alignment openings (106, 108) disposed in the midplane support (100) each configured to receive an alignment pin.

9. The communications assembly of claim 1, wherein the communication board (60) comprises a printed circuit board assembly, comprising:
a first printed circuit board (86A) including one or more first openings (228) disposed through the first printed circuit board (86A), and wherein the first printed circuit board (86A) connects to an assembly;
a second printed circuit board (86B) including one or more second openings (230) disposed through the second printed circuit board (86B), and wherein the second printed circuit board (86B) connects to the assembly; and
a standoff (196, 196') connecting the first printed circuit board (86A) to the second printed circuit board (86B), wherein the second printed circuit board (86B) connects to the assembly and wherein the standoff allows the first printed circuit board to float with respect to the second printed circuit board (86B) to align the first printed circuit board in the assembly prior to the first printed circuit board (86A) connecting to the assembly.

10. The communications assembly of claim 9, wherein the standoff (196, 196') comprises,
a body (199, 199');
a first collar (220) disposed in the body at a first end (222) of the body and inserted into a first opening (228) among the one or more first openings (228); and
a second collar (224) disposed in the body at a second end (226) of the body (199) opposite the first end (222) and inserted into a second opening (230) among the one or more second openings (230);
wherein the first collar (220) is configured to float inside the first opening to allow the first printed circuit board (86A) to float with respect to the standoff and the second printed circuit board (86B).

11. The communications assembly of claim 10, wherein the first collar (220) is configured to float inside the first opening (228) in at least two dimensions.

12. The communications assembly of claims 10 or 11, wherein the second collar (224) is configured to not float inside the second opening (230).

13. The communications assembly of claims 9, 10 or 12 wherein the one or more first openings (228) each have a first inner diameter.

14. The communications assembly of claim 13, wherein the first collar (220) has a first outer diameter less than the first inner diameter of the one or more first openings (228).

15. The communications assembly of claim 14, wherein the second collar (224) has a second outer diameter greater than the first outer diameter of the first collar (220).

## Patentansprüche

1. Kommunikationsanordnung, die Folgendes umfasst:
ein Gehäuse (72);
eine Kommunikationskarte (60), die ein erstes Ende und ein dem ersten Ende gegenüberliegendes zweites Ende besitzt und ferner mindestens einen Radiofrequenzanschluss (195), der an dem ersten Ende der Kommunikationskarte (60) angeordnet ist, und mindestens einen digitalen Anschluss (194), der an dem ersten Ende der Kommunikationskarte (60) angeordnet ist, umfasst;
eine Schnittstellenleiterplattenkarte, die mindestens einen komplementären Radiofrequenzanschluss (94C), der auf der Schnittstellenleiterplattenkarte angeordnet ist, und mindestens einen komplementären digitalen Anschluss (94B), der auf der Schnittstellenleiterplattenkarte (58) angeordnet ist, besitzt;
wobei die Radiofrequenzanschlüsse (195, 94C) gestaltet sind, um Radiofrequenzverbindungen aufzunehmen, und die digitalen Anschlüsse (94B) gestaltet sind, um digitale Verbindungen aufzunehmen;
**dadurch gekennzeichnet, dass**
dann, wenn die Schnittstellenleiterplattenkarte in das Gehäuse (72) eingeführt wird, der mindestens eine digitale Anschluss (194) mit dem mindestens einen komplementären digitalen Anschluss (94) in Eingriff gelangt, bevor der mindestens eine Radiofrequenzanschluss (195) mit dem mindestens einen komplementären Radiofrequenzanschluss (94C) in Eingriff gelangt, und dadurch den mindestens einen Radiofrequenzanschluss (195) mit dem mindestens einen komplementären Radiofrequenzanschluss (94C) durch Positionieren des mindestens einen Radiofrequenzanschlusses (195) in einer geeigneten relativen Position auf den mindestens einen komplementären Radiofrequenzanschluss (94C) ausrichtet.

2. Kommunikationsanordnung nach Anspruch 1, wobei sich der mindestens eine Radiofrequenzanschluss (195) um eine erste Strecke über das erste Ende der Kommunikationskarte (60) hinaus erstreckt.

3. Kommunikationsanordnung nach Anspruch 2, wobei sich der mindestens eine digitale Anschluss (194) um eine zweite Strecke, die größer als die erste Strecke ist, über das erste Ende der Kommunikationskarte (60) hinaus erstreckt.

4. Kommunikationsanordnung nach Anspruch 3, wobei der Unterschied zwischen der ersten Strecke und der zweiten Strecke kleiner als 0,1 Zoll ist.

5. Kommunikationsanordnung nach den Ansprüchen 1 und 4, wobei die Schnittstellenleiterplattenkarte aus einer Mittelebenenschnittstellenkarte (58) besteht.

6. Kommunikationsanordnung nach Anspruch 5, wobei die Mittelebenenschnittstellenkarte (58) auf einer Mittelebenenhalterung (100) befestigt ist, die in einem Gehäuse befestigt ist, das konfiguriert ist, die Mittelebenenschnittstellenkarte (58) in einer Grundebene des Gehäuses zu halten.

7. Kommunikationsanordnung nach Anspruch 6, die ferner mindestens ein Ausrichtungsmerkmal (102), das in der Mittelebenenhalterung (100) angeordnet ist, umfasst, das konfiguriert ist, mit der Mittelebenenschnittstellenkarte (58) ineinanderzugreifen, um die Mittelebenenschnittstellenkarte (58) mit der Mittelebenenhalterung (100) in mindestens zwei Dimensionen des Gehäuses auszurichten.

8. Kommunikationsanordnung nach Anspruch 7, wobei das mindestens eine Ausrichtungsmerkmal (102) aus mindestens zwei Ausrichtöffnungen (106, 108), die in der Mittelebenenhalterung (100) angeordnet sind, besteht, wovon jede konfiguriert ist, einen Führungsstift aufzunehmen.

9. Kommunikationsanordnung nach Anspruch 1, wobei die Kommunikationskarte (60) eine Leiterplattenkartenanordnung umfasst, die umfasst:
eine erste Leiterplatte (86A), die eine oder mehrere Öffnungen (228), die durch die erste Leiterplatte (86A) angeordnet sind, enthält und wobei die erste Leiterplatte (86A) an eine Anordnung angeschlossen ist;
eine zweite Leiterplatte (86B), die eine oder mehrere zweite Öffnungen (230), die durch die zweite Leiterplatte (86B) angeordnet sind, enthält, und wobei die zweite Leiterplatte (86B) an die Anordnung angeschlossen ist; und
einen Abstandsbolzen (196, 196'), der die erste Leiterplatte (86A) mit der zweiten Leiterplatte (86B) verbindet, wobei die zweite Leiterplatte (86B) an die Anordnung angeschlossen ist und wobei der Abstandsbolzen ermöglicht, dass die erste Leiterplatte in Bezug auf die zweite Leiterplatte (86B) schwebt, um die erste Leiterplatte in der Anordnung auszurichten, bevor die erste Leiterplatte (86A) an die Anordnung angeschlossen wird.

10. Kommunikationsanordnung nach Anspruch 9, wobei der Abstandsbolzen (196, 196') Folgendes umfasst:
einen Körper (199, 199');
einen ersten Bund (220), der in dem Körper an einem ersten Ende (222) des Körpers angeordnet ist und in eine erste Öffnung (228) unter der einen oder den mehreren ersten Öffnungen (228) eingeführt wird; und
einen zweiten Bund (224), der in dem Körper gegenüber dem ersten Ende (222) an einem zweiten Ende (226) des Körpers (199) angeordnet ist und in eine zweite Öffnung (230) unter der einen oder den mehreren zweiten Öffnungen (230) eingeführt wird;
wobei der erste Bund (220) konfiguriert ist, innerhalb der ersten Öffnung zu schweben, um zu ermöglichen, dass die erste Leiterplatte (86A) in Bezug auf den Abstandsbolzen und die zweite Leiterplatte (86B) schwebt.

11. Kommunikationsanordnung nach Anspruch 10, wobei der erste Bund (220) konfiguriert ist, innerhalb der ersten Öffnung (228) in mindestens zwei Dimensionen zu schweben.

12. Kommunikationsanordnung nach den Ansprüchen 10 oder 11, wobei der zweite Bund (224) konfiguriert ist, nicht innerhalb der zweiten Öffnung (230) zu schweben.

13. Kommunikationsanordnung nach den Ansprüchen 9, 10, oder 12, wobei die eine oder die mehreren ersten Öffnungen (228) jede einen ersten inneren Durchmesser besitzt.

14. Kommunikationsanordnung nach Anspruch 13, wobei der erste Bund (220) einen ersten äußeren Durchmesser besitzt, der kleiner als der erste innere Durchmesser der einen oder der mehreren ersten Öffnungen (228) ist.

15. Kommunikationsanordnung nach Anspruch 14, wobei der zweite Bund (224) einen zweiten äußeren Durchmesser besitzt, der größer als der erste äußere Durchmesser des ersten Bunds (220) ist.

## Revendications

1. Ensemble de communications, comprenant :
une enceinte (72) ;
une carte de communications (60) ayant une première extrémité et une deuxième extrémité opposée à la première extrémité, et comprenant en outre au moins un connecteur de radiofréquence (195) disposé à la première extrémité de la carte de communications (60) et au moins un connecteur numérique (194) disposé à la première extrémité de la carte de communications (60) ;
une carte de circuit imprimé d'interface ayant au moins un connecteur de radiofréquence complémentaire (94C) disposé sur la carte de circuit imprimé d'interface et au moins un connecteur numérique complémentaire (94B) disposé sur la carte de circuit imprimé d'interface (58) ;
dans lequel les connecteurs de radiofréquence (195, 94C) sont conçus de façon à recevoir des connexions de radiofréquence et les connecteurs numériques (94B) sont conçus de façon à recevoir des connexions numériques ;
**caractérisé en ce que**
lorsque la carte de circuit imprimé d'interface est insérée dans l'enceinte (72), l'au moins un connecteur numérique (194) s'engage avec l'au moins un connecteur numérique complémentaire (94), avant que l'au moins un connecteur de radiofréquence (195) ne s'engage avec l'au moins un connecteur de radiofréquence complémentaire (94C) et n'aligne ainsi l'au moins un connecteur de radiofréquence (195) avec l'au moins un connecteur de radiofréquence complémentaire (94C) en plaçant l'au moins un connecteur de radiofréquence (195) dans une position relative appropriée par rapport à l'au moins un connecteur de radiofréquence complémentaire (94C).

2. Ensemble de communications selon la revendication 1, dans lequel l'au moins un connecteur de radiofréquence (195) s'étend sur une première distance au-delà de la première extrémité de la carte de communications (60).

3. Ensemble de communications selon la revendication 2, dans lequel l'au moins un connecteur numérique (194) s'étend sur une deuxième distance plus grande que la première distance au-delà de la première extrémité de la carte de communications (60).

4. Ensemble de communications selon la revendication 3, dans lequel la différence entre la première distance et la deuxième distance est inférieure à 0,1 pouce.

5. Ensemble de communications selon les revendications 1 et 4, dans lequel la carte de circuit imprimé d'interface consiste en une carte d'interface de fond de panier central (58).

6. Ensemble de communications selon la revendication 5, dans lequel la carte d'interface de fond de panier central (58) est montée sur un support de fond de panier central (100) monté dans un logement configuré pour supporter la carte d'interface de panier central (58) dans un plan de référence du logement.

7. Ensemble de communications selon la revendication 6, comprenant en outre au moins un dispositif d'alignement (102) disposé dans le support du fond de panier central (100) configuré de façon à s'engager avec la carte d'interface de fond de panier central (58) pour aligner la carte d'interface de fond de panier central (58) avec le support du fond de panier central (100) dans au moins deux dimensions du logement.

8. Ensemble de communications selon la revendication 7, dans lequel l'au moins un dispositif d'alignement (102) consiste en au moins deux ouvertures d'alignement (106, 108) disposées dans le support du fond de panier central (100), configurées chacune pour recevoir une goupille d'alignement.

9. Ensemble de communications selon la revendication 1, dans lequel la carte de communications (60) comprend un ensemble carte de circuit imprimé, comprenant :
une première carte de circuit imprimé (86A) comportant une ou plusieurs premières ouvertures (228) disposées à travers la première carte de circuit imprimé (86A), et cette première carte de circuit imprimé (86A) se connectant à un ensemble ;
une deuxième carte de circuit imprimé (86B) comportant une ou plusieurs deuxièmes ouvertures (230) disposées à travers la deuxième carte de circuit imprimé (86B), et cette deuxième carte de circuit imprimé (86B) se connectant à l'ensemble ; et
une douille-entretoise (196, 196') connectant la première carte de circuit imprimé (86A) à la deuxième carte de circuit imprimé (86B), la deuxième carte de circuit imprimé (86B) se connectant à l'ensemble et la douille-entretoise permettant à la première carte de circuit imprimé de flotter par rapport à la deuxième carte de circuit imprimé (86B) pour aligner la première carte de circuit imprimé dans l'ensemble avant que la première carte de circuit imprimé (86) ne se connecte à l'ensemble.

10. Ensemble de communications selon la revendication 9, dans lequel la douille-entretoise (196, 196') comprend :
un corps (199, 199') ;
un premier collier (220) disposé dans le corps à une première extrémité (222) du corps et inséré dans une première ouverture (228) parmi la ou les premières ouvertures (228) ; et
un deuxième collier (224) disposé dans le corps à une deuxième extrémité (226) du corps (199) opposée à la première extrémité (222) et inséré dans une deuxième ouverture (230) parmi la ou les deuxièmes ouvertures (230) ;
dans lequel le premier collier (220) est configuré de façon à flotter à l'intérieur de la première ouverture pour permettre à la première carte de circuit imprimé (86A) de flotter par rapport à la douille-entretoise et à la deuxième carte de circuit imprimé (86B).

11. Ensemble de communications selon la revendication 10, dans lequel le premier collier (220) est configuré de façon à flotter à l'intérieur de la première ouverture (228) dans au moins deux dimensions.

12. Ensemble de communications selon les revendications 10 ou 11, dans lequel le deuxième collier (224) est configuré de façon à ne pas flotter à l'intérieur de la deuxième ouverture (230).

13. Ensemble de communications selon la revendication 9, 10 ou 12, dans lequel la ou les premières ouvertures (228) ont chacune un premier diamètre intérieur.

14. Ensemble de communications selon la revendication 13, dans lequel le premier collier (220) a un premier diamètre extérieur plus petit que le premier diamètre intérieur de la ou des premières ouvertures (228).

15. Ensemble de communications selon la revendication 14, dans lequel le deuxième collier (224) a un deuxième diamètre extérieur plus grand que le premier diamètre extérieur du premier collier (220).
